# FASCICULE DE BREVET EUROPEEN

(11) **EP 2 041 147 B1**
(45) Date de publication et mention de la délivrance du brevet: **26.10.2011**
(21) Numéro de dépôt: 07804002.9
(22) Date de dépôt: 10.07.2007
(51) Int. Cl.: C07F 7/08, C07C 17/30, C09K 3/18

(54) **COMPOSITION DE TRAITEMENT ET VITRAGE HYDROPHOBE**
ZUSAMMENSETZUNG FÜR HYDROPHOBE BEHANDLUNG UND GLASIERUNG
COMPOSITION FOR HYDROPHOBIC TREATMENT AND GLAZING

(30) Priorité: 11.07.2006 FR 0652914
(43) Date de publication de la demande: 01.04.2009
(73) Titulaire: SAINT-GOBAIN GLASS FRANCE, 92400 Courbevoie (FR)
(72) Inventeur: HUIGNARD, Arnaud, F-75018 Paris (FR); LAHLIL, Khalid, F-91400 Orsay (FR); ITHURRIA, Sandrine, F-75004 Paris (FR); GACOIN, Thierry, F-91140 Bures Sur Yvette (FR); BOILOT, Jean-Pierre, F-92360 Meudon La Foret (FR)
(74) Mandataire: Cardin, Elise
(86) Numéro de dépôt international: PCT/FR2007/051625
(87) Numéro de publication internationale: WO 2008/007011

(56) Documents cités:
- EP-A1- 0 799 873
- WO-A2-2005/084943
- US-A- 2 915 544
- US-A- 3 146 251
- US-A- 4 001 403

## Description

La présente invention est relative au domaine des substrats hydrophobes, notamment des vitrages dits antipluie pour le bâtiment ou les véhicules de transport.

La fonctionnalité hydrophobe est réalisée par la facilité de gouttes d'eau de pluie notamment, de s'écouler sur la surface du vitrage, soit par gravité sur un vitrage suffisamment incliné, soit sous la pression de l'air à la surface du pare-brise d'une automobile en mouvement par exemple.

On connaît du brevet EP 799 873 une composition de traitement hydrophobe pour vitrage dans laquelle l'agent hydrophobe est un alkoxysilane fluoré de formule :

F₃C-(CF₂)ₘ-(CH₂)ₙ Si (OR)₃₋ₚ R'ₚ

dans laquelle
- m est un entier compris entre 0 et 15,
- n est un entier compris entre 1 et 5,
- p = 0, 1 ou 2,
- R est un groupe alkyle,
- R' est un groupe alkyle ou un atome d'hydrogène.

Cet agent hydrophobe est déposé dans un système de solvant(s) aqueux comprenant au moins un alcool et de l'eau et au moins un catalyseur choisi parmi un acide et/ou une base de Bronsted, la proportion d'eau par rapport à l'alcool étant comprise entre 3 et 20 % en volume.

La couche hydrophobe est déposée sur un primaire de silice sol-gel.

Cependant, compte tenu des nombreuses sollicitations mécaniques (abrasion, essuyage) et climatiques (corrosion saline, rayonnements UV, pluies acides ...), ce revêtement a une durabilité perfectible, d'environ 3 ans pour des vitres latérales d'automobiles, d'environ 1 an pour des pare-brises.

Une couche hydrophobe plus durable a donc été élaborée selon la demande WO 2005/084943. La couche hydrophobe est ici déposée sur une surface de composition essentiellement minérale comprenant du silicium qui se trouve dans un état activé. Ce dernier peut résulter
- de ce que ladite surface vient juste d'être préparée par un procédé approprié, ou
- de ce que ladite surface vient juste d'être soumise à un traitement approprié, tel que désalcalinisation de verre, ou attaque de silice par un plasma fluoré avec création d'une rugosité RMS comprise entre 0,1 et 40 nm.

La surface dans son état activé peut également être chargée électrostatiquement.

La propriété hydrophobe est apportée par l'alkoxysilane fluoré décrit précédemment. Cependant, si la durabilité est nettement améliorée, la fonctionnalité hydrophobe exprimée par la capacité du vitrage à évacuer les gouttes d'eau sous un flux d'air, est réduite.

Les inventeurs se sont donc donnés pour but l'élaboration d'un revêtement hydrophobe permettant une évacuation spontanée des gouttes d'eau à plus basses vitesses du véhicule, car cette fonctionnalité est de plus en plus requise par les constructeurs automobiles en particulier. Les inventeurs ont veillé d'autre part au maintien d'une durabilité du revêtement acceptable, la réduction de la vitesse d'évacuation spontanée des gouttes d'eau y contribuant par une diminution de l'essuyage et donc des sollicitations mécaniques. Ils ont ainsi défini une nouvelle famille d'agents hydrophobes permettant d'atteindre leur objectif.

L'invention a donc pour objet un procédé visant à procurer ou restaurer l'hydrophobie d'un substrat par le dépôt d'une composition de traitement hydrophobe comprenant un ou plusieurs composés en mélange répondant à la formule 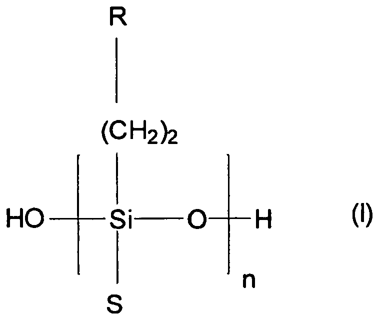 dans laquelle
- au moins un R est un groupe Cₐ F₂ₐ₊₁, a étant un nombre entier,
- un autre R pouvant être un groupe Si X_{3-b} R¹_{b},
   b étant 0, 1 ou 2
   X un groupe hydrolysable tel qu'alkoxy, hydroxy ou halogéno R¹ un groupe hydrocarboné tel qu'alkyle inférieur
- S est un atome d'hydrogène, un groupe OH, un groupe alkyle notamment inférieur tel que CH₃ ou un groupe O Si R² R³ R⁴, R², R³ et R⁴ étant identiques ou différents et consistant notamment en l'un des groupes susmentionnés
- S est un atome d'hydrogène, un groupe OH, un groupe alkyle notamment inférieur tel que CH₃ ou un groupe O Si R² R³ R⁴, R², R³ et R⁴ étant identiques ou différents et consistant notamment en l'un des groupes susmentionnés portés par un atome Si, tels que (CH₂)₂ - R, un atome d'hydrogène, un groupe alkyle ou O Si R²R³R⁴,
- n est un entier ≥ 1,
- le nombre total d'atomes Si n'excédant pas 20.

Le nombre d'atomes de Si des composés n'excède pas de préférence 10, et de manière particulièrement préférée 5.

De préférence, la composition de l'invention comprend un ou plusieurs composés en mélange choisis parmi

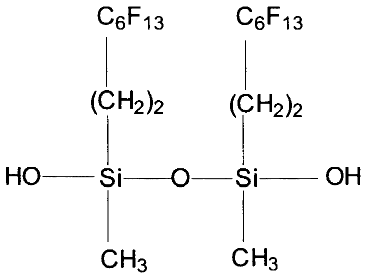

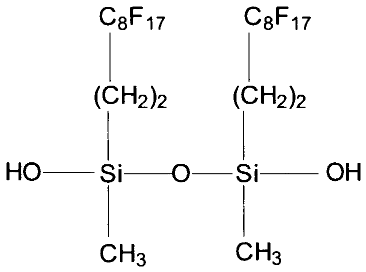

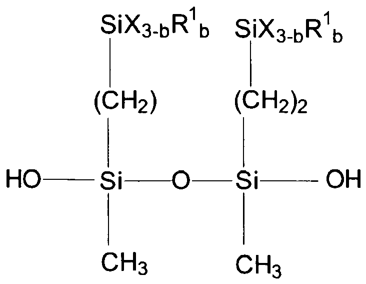

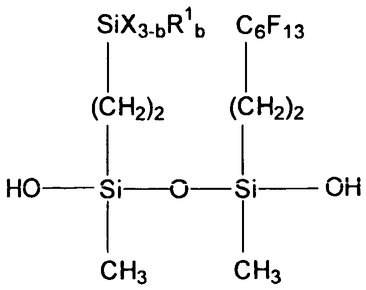

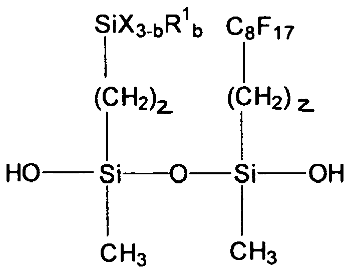

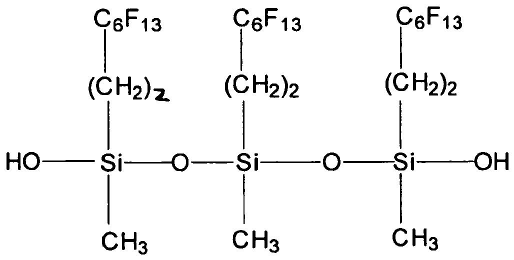

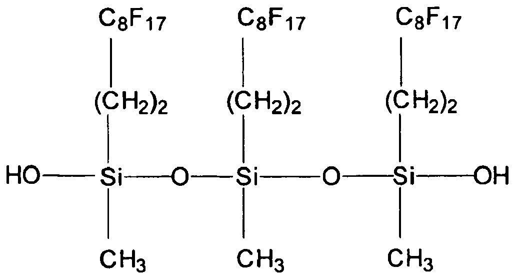

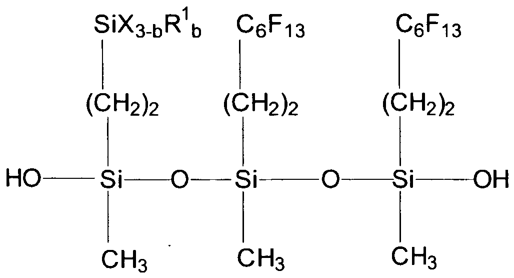

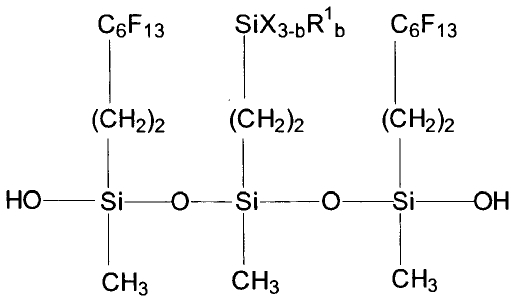

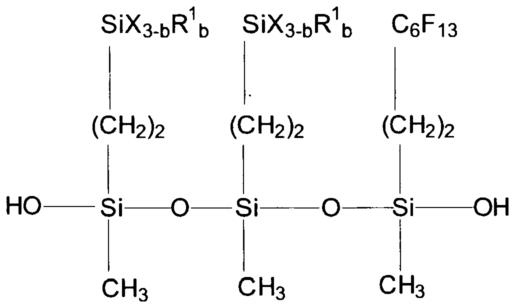

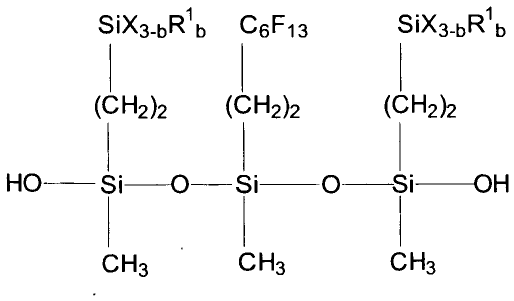

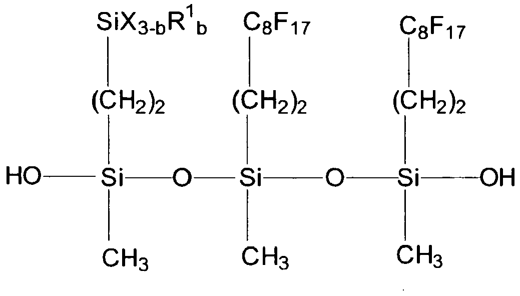

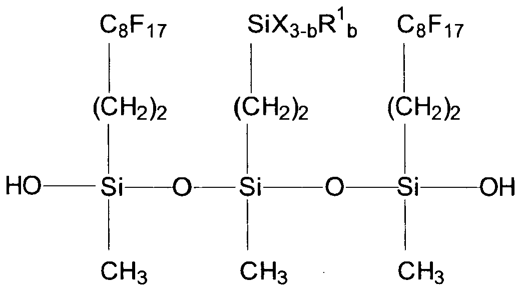

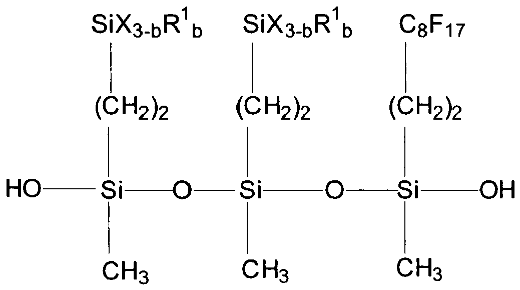

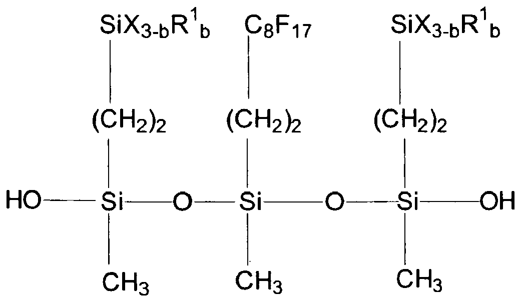

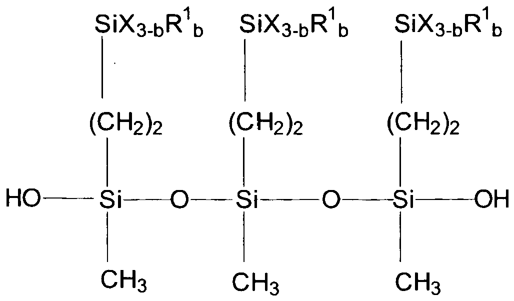

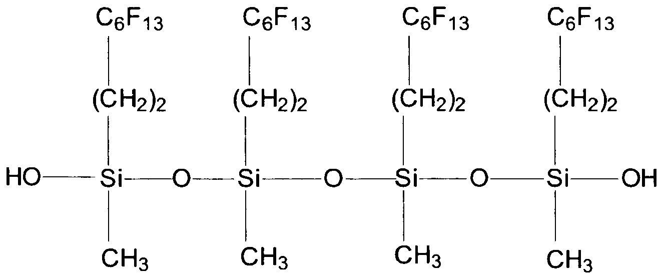

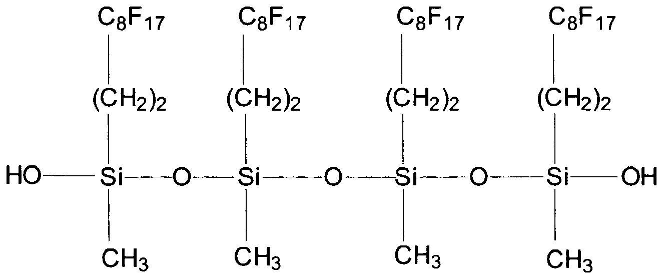

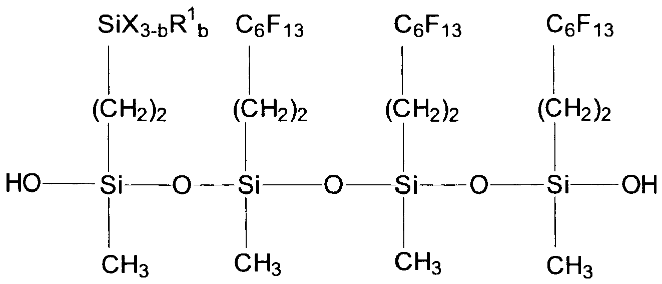

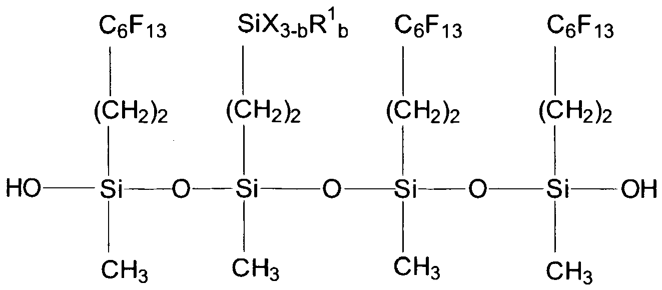

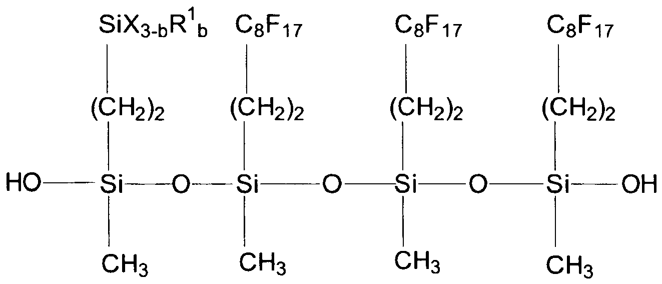

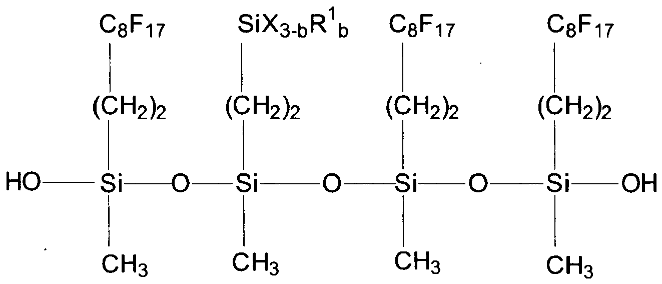

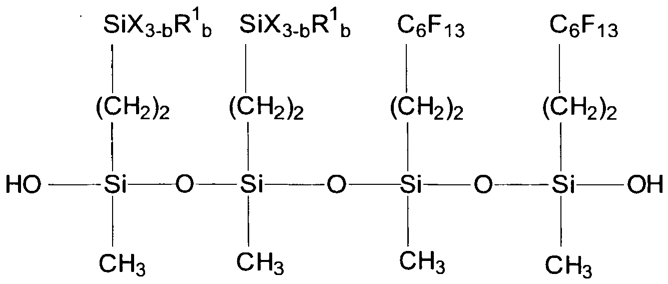

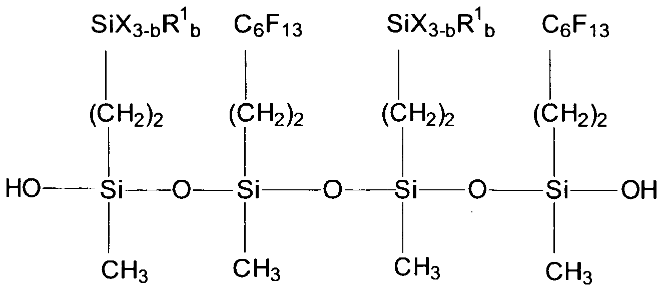

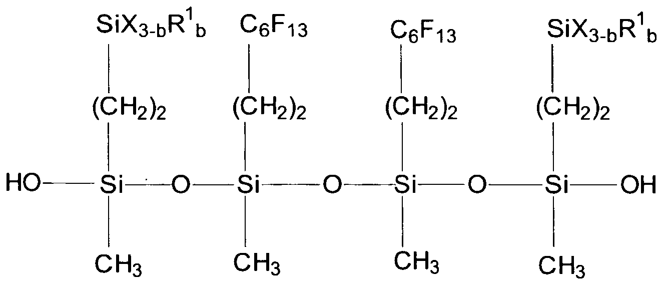

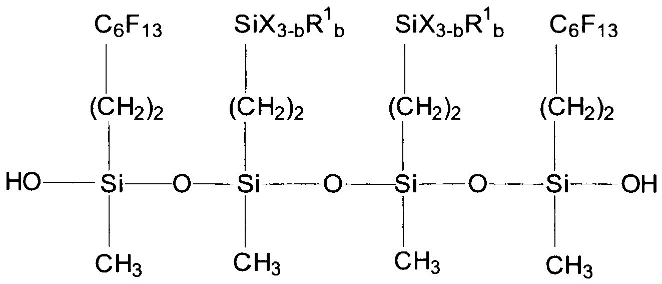

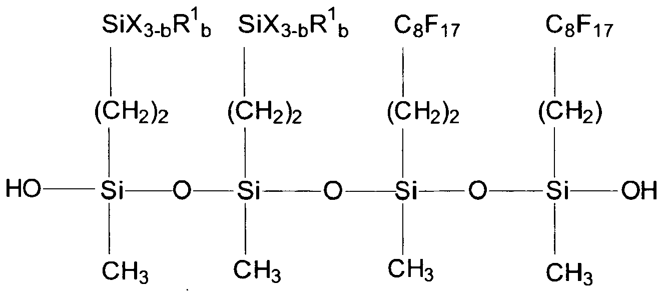

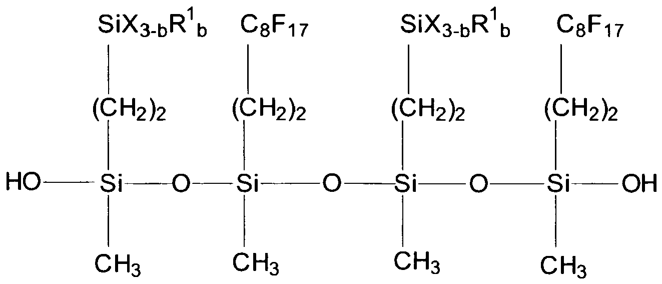

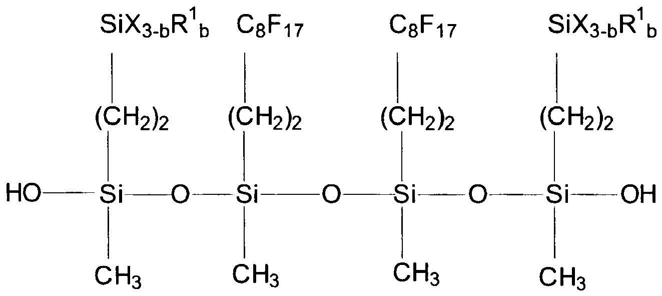

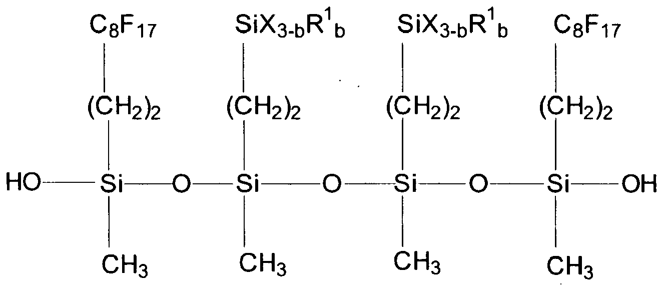

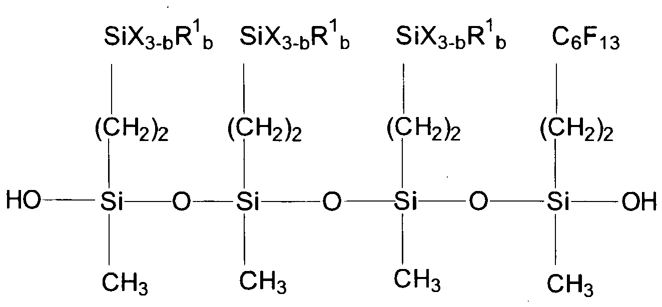

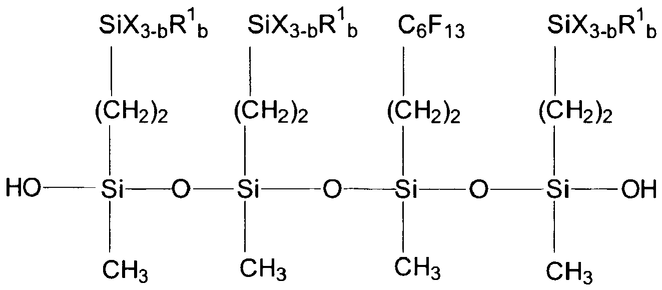

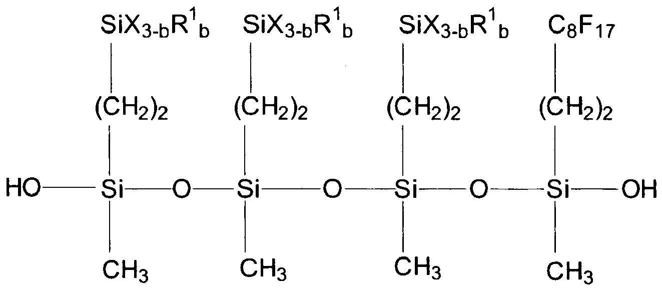

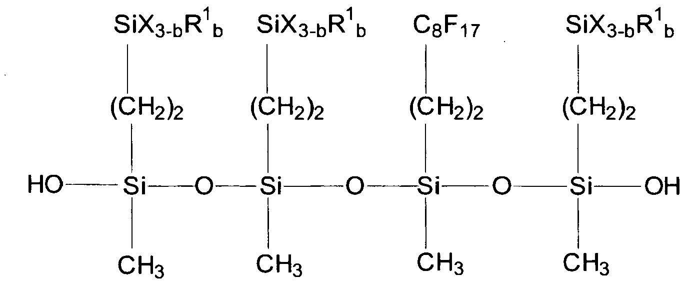

Selon d'autres caractéristiques avantageuses de la composition de l'invention :
- elle consiste en une solution alcoolique basique ;
- elle contient 0,05 à 5% en masse de composé(s) de formule (I).

L'invention a également pour objet un procédé visant à procurer ou restaurer l'hydrophobie d'un substrat par le dépôt d'une composition décrite précédemment.

Selon une première variante, ce procédé comprend les étapes préalables consistant à
- préparer une composition de primage obtenue à partir d'un mélange d'un silane SiX₄, X étant une fonction hydrolysable, avec un système de solvant(s) aqueux et alcool et au moins un catalyseur choisi parmi un acide et/ou une base de Bronsted, la teneur en SiX₄ étant comprise entre 0,001 et 5 % en poids de la composition,
- traiter au moins la partie du substrat destinée à recevoir la couche hydrophobe avec ladite composition de primage.

Selon une seconde variante, ce procédé comprend les étapes préalables consistant à
- préparer une composition de primage obtenue à partir d'un mélange d'un disilane X₃SiRSiX₃, X étant une fonction hydrolysable et R une chaîne alkyle linéaire, ramifiée ou aromatique, de préférence linéaire, dans lequel le nombre d'atomes de carbone établissant la liaison entre les deux atomes de silicium est compris entre 1 et 4, avec un système de solvant(s) aqueux et alcool et au moins un catalyseur choisi parmi un acide et/ou une base de Bronsted, la teneur en X₃SiRSiX₃ étant comprise entre 0,001 et 5 % en poids de la composition ;
- traiter au moins la partie du substrat destinée à recevoir la couche hydrophobe avec ladite composition de primage.

Conformément à une troisième variante du procédé de l'invention, on dépose la composition définie ci-dessus sur une sous-couche essentiellement minérale à teneur en silicium, dont la surface se trouve dans un état activé.

L'état activé a été défini dans la partie introductive de la demande, en référence à la demande WO 2005/084943.

Il est précisé que les première et seconde variantes du procédé d'une part, la troisième d'autre part ne s'excluent pas mutuellement, mais peuvent être menées conjointement.

D'autres objets de l'invention sont :
- un substrat verrier hydrophobe présentant une couche extérieure formée à partir d'une composition de l'invention ;
- l'application d'un tel substrat verrier comme vitrage de véhicule de transport terrestre, aquatique ou aérien, vitrage pour le bâtiment, pour le mobilier urbain tel qu'abribus, écran d'affichage, lampe, pour l'électroménager notamment les tablettes ou portes de réfrigérateur, congélateur, four, plaque vitrocéramique, pour l'aménagement intérieur comme mobilier, tablettes, cabine de douche, aquarium, dispositif d'éclairage, écran de téléviseur, ordinateur ou similaire, comme verre ophtalmique, pour le conditionnement comme bouteille, flacon ou pot.

L'invention est illustrée par les exemples suivants.

### Exemple 1

### Synthèse de composés de formule (I).

a) La première étape de la synthèse consiste en une perfluoroalkylation en milieu anhydre et sans solvant du 2, 4, 6, 8 - tétraméthyl - 2, 4, 6, 8 - tétravinylcyclotétrasiloxane. Dans un ballon on introduit 1,5ml de la molécule tétravinylsiliconée soit 4,4 mmol puis en trois fois espacées de 2 heures on ajoute 7,55 ml d'iodoperfluorohexane CF₃(CF₂)₅I (Rfl) (soit 8 éq : 35 mmol) ainsi qu'environ 50 mg d'AIBN à chaque fois. Le tout est porté à reflux à 100°C pendant une nuit sous atmosphère d'azote. On obtient une huile brute jaune orangée. Au cours de cette réaction, le Rfl peut soit se dimériser en formant comme produit le dimère CF₃(CF₂)₁₀CF₃, soit se protoner en formant RfH. Ces produits secondaires sont ensuite éliminés en séchant les produits de réactions à la pompe à palette.
   On obtient après purification 7,9 g de produit soit un rendement obtenu de 84%. La RMN du proton confirme bien la pureté du produit obtenu. 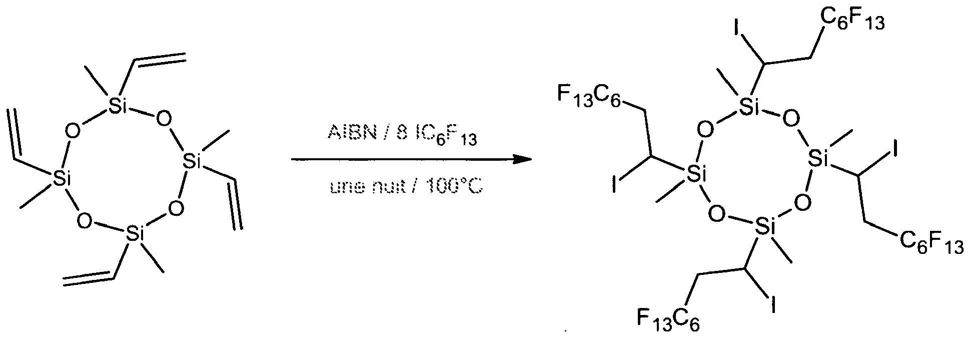
   La réduction radicalaire des atomes d'iode est réalisée en présence d'hydrure de tributylétain en quantité stoechiométrique et catalysée par l'AIBN dans le toluène, suivie d'une purification par passage du produit sur une colonne chromatographique silice/KF.
   La réduction du cycle doit se faire sous atmosphère inerte, car l'hydrure de tributylétain est très réactif vis-à-vis de l'humidité ambiante.
   Dans un ballon on introduit 10ml de toluène fraîchement distillé ou passé sur une colonne d'alumine, 7,8 g de 2, 4, 6, 8 - tétraméthyl - 2, 4, 6, 8 - tétravinylcyclotétrasiloxane perfluoroalkylé, ainsi que 70 mg d'AIBN sont ajoutés. Après avoir laissé agiter à température ambiante et sous azote pendant 30 min, on ajoute au travers d'un bouchon jupe 3,95 ml d'hydrure de tributylétain (soit un équivalent par iode). Le ballon est ensuite mis à chauffer à une température de 70°C sous agitation pendant une nuit. 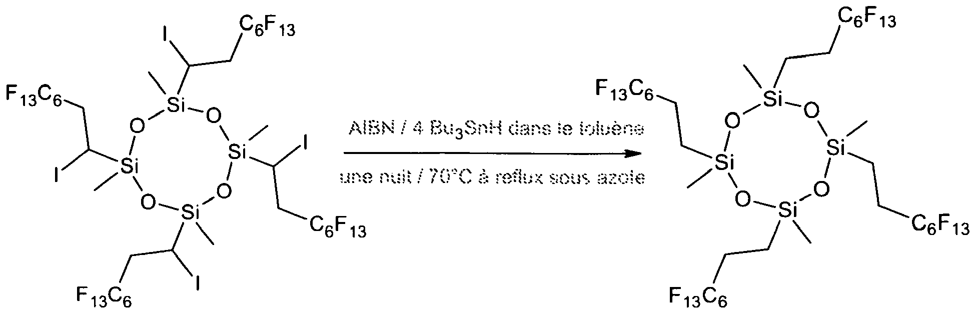
   Le mélange obtenu est un milieu biphasique. Les spectres RMN de chacune de ces deux phases permettent de déduire que seule la phase la plus dense renferme le produit recherché alors que la moins dense contient essentiellement des dérivés stanniques issus de la réaction avec le toluène.
   Nous séparerons donc dans un premier temps ces deux phases par décantation.
   La purification du produit se fait en passant le mélange sur une colonne chromatographique constituée à 90% (45 g) en masse de silice et à 10% (5 g) en masse de fluorure de potassium (KF). La colonne est d'abord conditionnée avec deux fois 200 ml d'éther puis le produit dissous dans de l'éther est à son tour passé sur la colonne chromatographique.
   Sur la colonne, Bu₃SnI va réagir avec KF pour donner Bu₃SnF qui réagit rapidement sur la silice. Le produit purifié dans l'éther est récupéré puis séché à la pompe à palette.

   Bu₃SnI + KF_{aq} → Bu₃SnF ↓ + Kl_{aq}

   On obtient après purification 4,9 g de cycle perfluoré réduit, le rendement de la réduction est de 82%. Le rendement total de la perfluoration est de 69%.
   Le produit brut obtenu est une huile très légèrement jaune qui cristallise très rapidement à température ambiante.
   Ce produit est par ailleurs insoluble dans la majorité des solvants organiques usuels. Ainsi le spectre RMN ¹H peut être fait dans du THF deutéré qui est un très bon solvant de notre produit, pour suivre la réaction.
b) Les liaisons SI - O - Si se coupant en milieu basique, il est procédé à l'ouverture du cycle obtenu précédemment en présence de potasse en milieu alcoolique, afin d'obtenir les composés silicones fluorés linéaires. En effet, bien que le cycle soit insoluble dans l'éthanol, une fois ouvert, il se solubilise dans ce solvant. La réaction est conduite en ajoutant le minimum d'eau nécessaire à la solubilisation de la potasse en chauffant à 40°C.

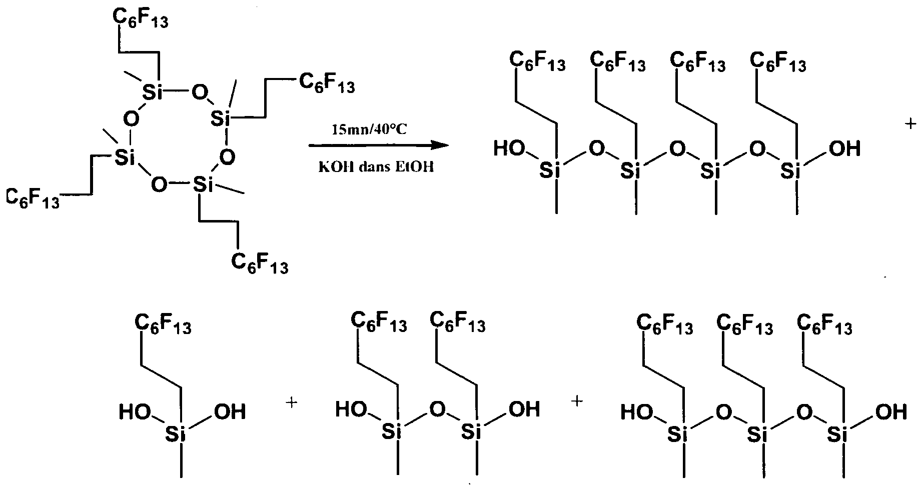

On étudie l'optimisation de la quantité de potasse à introduire dans le milieu réactionnel.

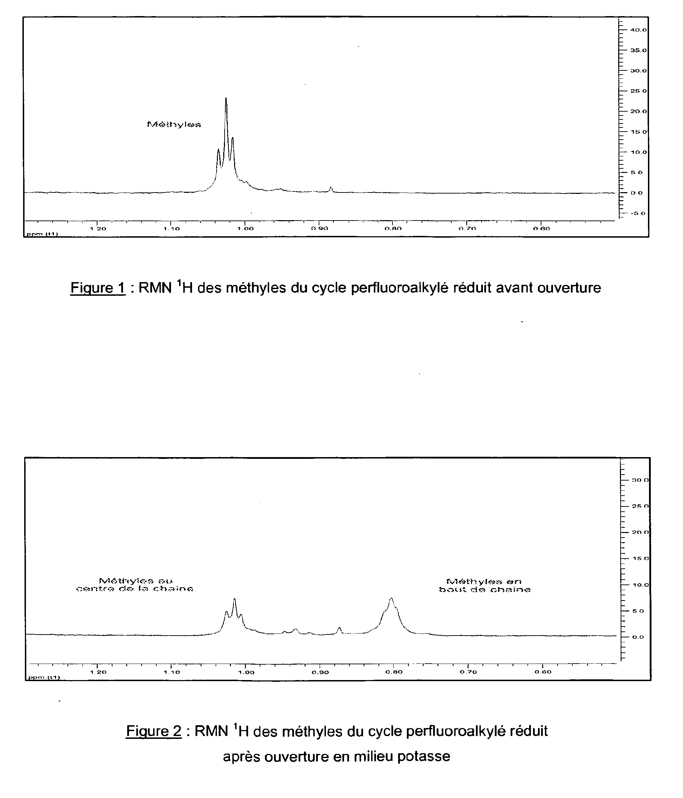

Les figures 1 et 2 en annexe représentent l'analyse par RMN du proton des groupes méthyle du 2, 4, 6, 8 - tétraméthyl - 2, 4, 6, 8 - tétravinylcyclotétrasiloxane perfluoroalkylé - appelé « cycle perfluoroalkylé réduit » - avant, respectivement après ouverture en milieu potasse.
La figure 2 présente deux types de signaux à 1,02 ppm et 0,80 ppm qui peuvent respectivement être attribués aux méthyles en milieu de chaînes - O - Si - O - et en bout de chaînes - O - Si - OH.

La RMN du silicium 29 confirme bien l'ouverture du cycle.

Une étude par chromatographie d'exclusion stérique va nous permettre d'optimiser la quantité de potasse à introduire dans le milieu pour obtenir des fragments de différentes tailles.

La chromatographie d'exclusion stérique est ordinairement utilisée pour l'étude des polymères. Nous considérerons ici que nous étudions de petits polymères siliconés.

Contrairement aux méthodes de chromatographie conventionnelles, le phénomène physique mis en jeu dans la chromatographie d'exclusion stérique permettant la séparation des différentes macromolécules n'est pas basé sur l'affinité chimique avec le support mais simplement sur la taille des molécules ou plus exactement leur volume hydrodynamique. En effet, les molécules éluées peuvent ou non pénétrer dans les colonnes constituées de billes poreuses et ainsi, les molécules les plus petites sont retenues alors que les molécules les plus grosses éluent plus rapidement. En sortie de colonne, des détecteurs peuvent intégrer le nombre de macromolécules sortant de la colonne à un instant donné.

La colonne utilisée est une colonne G2000HXL, le détecteur est un refractomètre qui calcule une différence d'indice entre ce qui passe dans la colonne (THF+milieu réactionnel) et l'éluant (THF). Le solvant utilisé est du THF à un débit de 0,8ml/min, la température de la colonne est de 25°C.

L'hydrolyse basique du 2, 4, 6, 8 - tétraméthyl - 2, 4, 6, 8 - tétravinylcyclotétrasiloxane perfluoré a été effectuée dans les conditions déterminées précédemment, c'est-à-dire dans l'alcool avec une solution concentrée de potasse sous agitation à 40°C.

Le temps d'hydrolyse considéré est celui entre le début de l'hydrolyse et la dilution dans le THF.

La concentration du 2, 4, 6, 8 - tétraméthyl - 2, 4, 6, 8 - tétravinylcyclotétrasiloxane perfluoré étant fixée à 3% massique par rapport à l'ensemble du mélange, nous avons fait varier le nombre d'équivalents de potasse (équivalents molaires par rapport au cycle fluoré) :
- 2 équivalents
- 5 équivalents
- 10 équivalents

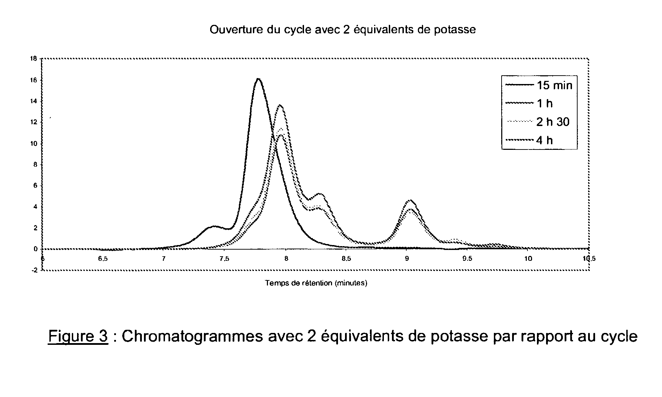

Les chromatogrammes ont été réalisés pour des temps d'hydrolyse allant de 15 minutes à 4 heures. Les chromatogrammes de l'ouverture du cycle avec deux équivalents molaires de potasse sont présentés sur la figure 3. Ceux suivant l'ouverture avec 5 et 10 équivalents de potasse ont été réalisés de même.

D'après la figure 3 nous remarquons qu'après 15 minutes d'hydrolyse un seul pic est visible à 7,8 min non détectable aux autres temps d'hydrolyse. Il correspond au cycle perfluoré fermé qui s'ouvre finalement après 1 h d'hydrolyse.

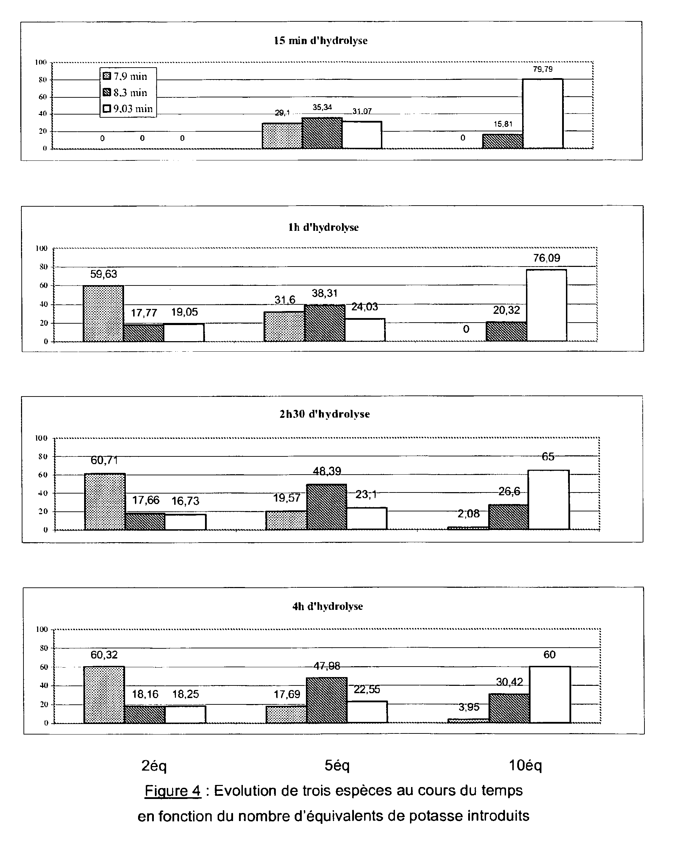

Nous observons par ailleurs trois principaux pics à 7,9 min, 8,30 min et 9,0 min, espèces dont nous allons tracer l'évolution au cours du temps en fonction de la quantité de potasse ajoutée (figure 4 en annexe).

D'après ce qui a été énoncé, les espèces aux temps de rétention les plus courts sont les plus condensées. Cela laisse supposer que l'espèce à 7,9 min correspond au fragment à quatre atomes de silicium et les espèces à 8,3 min et 9,0 min correspondent à des fragments linéaires présentant trois et deux atomes de silicium. Les espèces aux temps de rétention supérieurs ou inférieurs sont négligeables comparées aux autres.

| Temps de rétention | Attribution |
|---|---|
| 7,8 minutes | Cycle fermé |
| 7,9 minutes | Fragment à 4 atomes de silicium |
| 8,3 minutes | Fragment à 3 atomes de silicium |
| 9,0 minutes | Fragment à 2 atomes de silicium |

De la figure 4, nous pouvons tirer les conclusions suivantes :
- avec seulement deux équivalents de potasse et 15 minutes d'hydrolyse le cycle ne s'ouvre pas, il faut attendre au minimum une heure d'hydrolyse.
- avec deux équivalents de potasse, c'est le fragment à 4 atomes de silicium qui est majoritaire, alors qu'avec 5 équivalents c'est celui à 3 atomes de silicium et qu'à 10 équivalents c'est celui à 2 atomes de silicium.
- avec deux équivalents de potasse, les quantités de chacun des fragments restent quasi constantes au cours du temps, même si un début de condensation est observé au bout de 2h30 de réaction.
- avec cinq équivalents de potasse, il y a simultanément de la condensation et des fragmentations. En effet, le milieu est trop basique pour que le fragment à quatre atomes de silicium reste abondant, mais l'augmentation du temps d'hydrolyse induit en parallèle une condensation qui tend donc à donner une espèce majoritaire linéaire à 3 atomes de silicium.

Ainsi, nous avons montré que l'ouverture du cycle perfluoré peut se faire simplement et rapidement en milieu potasse/éthanol (ou isopropanol) avec une quantité variable de potasse par rapport au cycle. En contrôlant la quantité de potasse alcoolique, il s'avère possible d'obtenir des polymères silicones fluorés linéaires de taille déterminée (2, 3 ou 4 atomes de silicium).

### Exemple 2

### Autre synthèse de composés de formule (I)

On effectue comme à l'exemple 1 une perfluoroalkylation des doubles liaisons d'une molécule octavinyle représentée ci-dessous, appelée cube.

Celui-ci est sous forme solide (poudre) à température et à pression ambiante. Celui-ci n'étant pas soluble dans l'iodoperfluorohexane, il va donc falloir trouver un solvant pour cette réaction.

Après plusieurs essais, nous avons remarqué que l'octavinyle n'était soluble à chaud que dans l'acétone, le toluène, l'éther et le THF, et insoluble dans les alcools, les alcanes et l'acétonitrile. Or la réaction de perfluoroalkylation est faite à température assez élevée : 100°C et ces solvants (à part le toluène de Téb = 110°C) ont des températures d'ébullition de l'ordre de 50°C. Le THF qui présente une température d'ébullition intermédiaire de 70°C, a donc été choisi comme solvant.

Dans un ballon, sont introduits 2,5 g d'octavinyle solubilisés dans 20 ml de THF, puis les 13,7 ml de Rfl (16éq) avec 100 mg d'AIBN ajoutés en trois fois. La réaction est portée à 70°C sous atmosphère d'azote pendant une nuit.

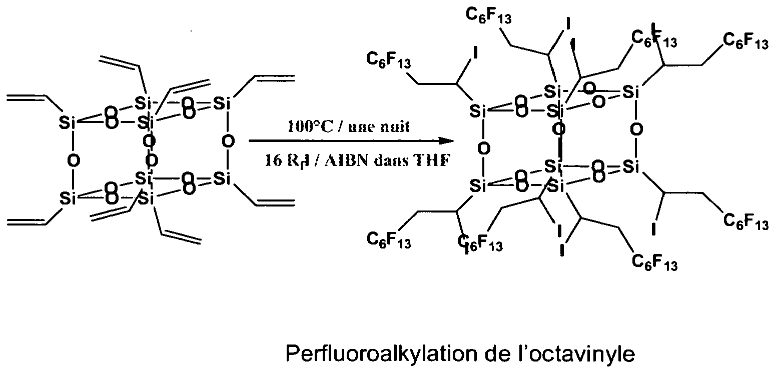

Après une nuit de réaction, nous observons la formation de deux phases dans le ballon. L'une liquide contenant le THF (facilement éliminable à la pompe à palette) et l'autre beaucoup plus visqueuse insoluble dans le THF. Ainsi au cours de la formation de cette espèce, il y a eu démixtion du milieu réactionnel et de la phase formée. Par ailleurs, la phase visqueuse est peu soluble à chaud.

Les deux phases ont été séparées à l'aide d'une ampoule à décanter en solubilisant la phase visqueuse avec du THF fluoré et la phase liquide avec de l'éthanol.

Après séchage de chacune de ces deux phases à la pompe à palette, nous obtenons 11,43 g de phase visqueuse et 5,89 g de phase liquide.

Ayant obtenu deux phases correspondant à deux produits différents, nous les avons réduites séparément. Ces réductions se sont faites de la même manière que pour le cycle perfuoroalkylé (exemple 1), c'est-à-dire dans du toluène à 70°C, pendant une nuit et sous atmosphère d'azote.

Dans un ballon, nous avons introduit 11,4 g de produit de la phase visqueuse, puis 20 ml de toluène. La réaction a tout d'abord été chauffée à l'abri de l'air sous agitation afin que le produit se solubilise, au moins partiellement. Nous y avons ensuite ajouté de l'AIBN en quantité catalytique. Le ballon est mis sous agitation pendant 30 minutes, enfin au travers d'un bouchon jupe sont introduits 5,8 ml d'hydrure de tribultylétain (soit 8 équivalents).

La réaction est ensuite portée à 70°C, sous atmosphère d'azote pendant une nuit. Et le produit obtenu est purifié en le passant sur colonne de silice : KF.

Nous obtenons 4,3 g de produit purifié, le rendement de la réduction est de 50% et celui de la réaction totale de 34%.

Par contre l'autre phase liquide reste inactive vis-à-vis de la réduction et ne présente aucun signal de RMN de proton significatif des groupements Si - CH₂ - CH₂-C₆F₁₃. Nous pensons que cette phase liquide est le produit d'addition de RFI avec le solvant (THF) qui peut s'ouvrir en présence d'initiateurs de radicaux tels qu'AIBN. Les spectres RMN proton et fluor confirment bien cette hypothèse.

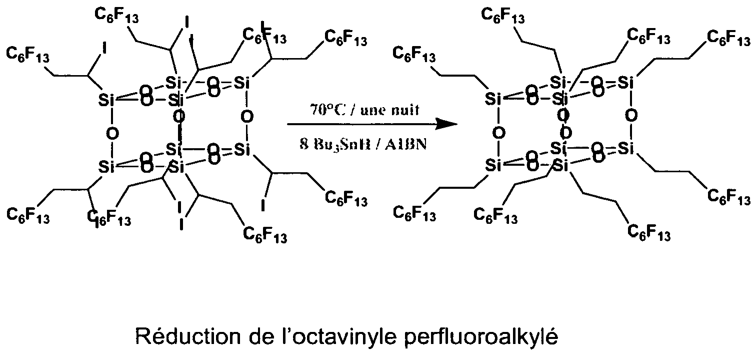

Le spectre RMN 1H de l'octavinyle perfluoré a été fait dans le THF fluoré en utilisant un capillaire de chloroforme renfermant un étalon interne : le paraxylène. Il confirme que la phase visqueuse obtenue en fin de première étape correspondait bien à l'octavinyle perfluoroalkylé.

Le rendement total de la perfluoration est de 34%.

Pour ouvrir la molécule cubique obtenue, nous avons utilisé de la potasse avec de l'isopropanol comme solvant, car sa température d'ébullition est supérieure à celle de l'éthanol, et nous pourrons ainsi chauffer le milieu réactionnel à 60°C.

De la même façon, une fois ouvert le cube perfluoré se solubilise, même si au premier abord sa solubilité semble être une difficulté.

Nous avons par ailleurs essayé de suivre cette ouverture par chromatographie d'exclusion stérique mais il s'est avéré que les chromatogrammes obtenus étaient compliqués. En effet, le cube peut se fragmenter en de nombreux morceaux, de conformations différentes bien que possédant le même nombre de silicium. D'après l'étude menée sur le cycle perfluoré (exemple 1), nous supposerons que plus il y a de potasse dans le milieu plus la molécule se fragmentera.

### Exemple 3

Des composés conformes à l'invention sont greffés dans les mêmes conditions que les revêtements hydrophobes de première génération décrits en partie introductive de la demande en référence au brevet EP 799 873.

On procède tout d'abord à l'avivage à l'oxyde de cérium de la surface de verre flotté silicosodocalcique. Il s'agit d'un polissage du verre par une poudre abrasive contenant majoritairement des particules microscopiques de CeO₂. Il est suivi d'un rinçage mécanique à l'eau finalisé par un rinçage à l'eau déminéralisée puis par un séchage.

On effectue ensuite un primage par une solution à 0,3% en masse de tétraéthoxysilane (TEOS) dans un mélange de 90% en masse d'isopropanol et 10% en masse d'HCl 0,3 molaire dans l'eau, mélange appelé dans la suite « mélange d'hydrolyse ». La solution est déposée après un séjour de 15 minutes à température ambiante à partir de sa préparation (temps d'hydrolyse). Ainsi est formée à la surface du verre une couche de SiO₂ de 5 nm d'épaisseur moyenne.

On dépose ensuite des concentrations massiques variables de divers agents hydrophobes dans le mélange d'hydrolyse qui vient d'être défini, avec des temps d'hydrolyse compris entre 15 minutes et 1 heure.

On mesure l'angle de contact d'une goutte d'eau déminéralisée à l'équilibre sur un substrat en position horizontale.

On mesure d'autre part l'angle d'avancée et l'angle de reculée, ainsi que leur différence appelée hystérèse. Les angles d'avancée et de reculée sont les limites de l'angle de contact d'une goutte sur une surface inclinée avant son décrochement.

L'angle d'avancée est évalué pendant la croissance (augmentation du volume) d'une goutte d'eau, l'angle de reculée pendant sa décroissance (diminution de son volume). Croissance et décroissance sont produites au moyen d'une seringue.

On mesure également les volumes de décrochement d'une goutte d'eau à inclinaisons de 45 et 90° du vitrage. Le volume de décrochement correspond au volume à partir duquel la goutte décroche spontanément d'un substrat incliné par rapport à l'horizontale. Ce volume est relié à la vitesse minimale d'un véhicule pour que les gouttes d'eau de pluie sur un pare-brise soient évacuées sous l'effet d'un flux d'air.

On effectue des dépôts de couches de composés obtenus aux exemples précédents.

On appelle ceux-ci cycle (selon l'exemple 1) ou cube (selon l'exemple 2).

On évalue à titre de comparaison le composé F₁₇C₈ - (CH₂)₂ - SI (OEt)₃, représentant les couches hydrophobes de la technique connue, appelé X dans la suite.

### a) Cycle perfluoré

D'après les résultats obtenus en chromatographie d'exclusion stérique, le cycle perfluoré s'ouvre dans l'éthanol pour différentes quantités de potasse. Des dépôts ont donc été effectués pour les quantités de potasse (dans un alcool) et temps d'hydrolyse suivants :
- 2 équivalents et 1 heure d'hydrolyse
- 5 équivalents et 15 minutes d'hydrolyse
- 10 équivalents et 15 minutes d'hydrolyse

Les résultats sont consignés dans le tableau ci-dessous. Les concentrations d'agents hydrophobes sont en pourcentages pondéraux.

| Molécule | θₑₐᵤ | θ_{Avancée} / θ_{Reculée} Hystérèse | Volumes de décrochement (µl) à 45° et 90° |
|---|---|---|---|
| Cycle 3% 2éq de KOH Ethanol | 98,9° ± 1,40 | 108°/84° 24° | 14,5 / 9,5 |
| Cycle 3% 5éq de KOH Ethanol | 107,4° ± 0,7° | 118°/98° 20° | 10,2/7,4 |
| Cycle 3% 10éq de KOH Isopropanol puis neutralisation | 105,9° ± 0,9° | 113°/95° 18° | 6,3 / 3,2 |
| X 3% | 108_{,} 0° ± 0,9° | 118°/81° 37° | 18,9 / 10,5 |

### Caractérisation des revêtements du cycle perfluoré

Remarquons que la solution pour le revêtement à dix équivalents de potasse a été faite dans l'isopropanol. En effet, dans l'éthanol, les fragments ne sont pas suffisamment solubles pour permettre un greffage satisfaisant sur verre.

De plus, la solution a été neutralisée avec 0,5 équivalent de HCl par rapport à la potasse. En effet, en l'absence de neutralisation, le milieu réactionnel est trop basique : la réaction de greffage à la surface du verre est alors défavorisée.

D'après le tableau ci-dessus, nous observons que les substrats présentent des angles de contact à l'eau satisfaisants, et des volumes de décrochement inférieurs à ceux obtenus avec le perfluorosilane standard. Les meilleurs résultats sont obtenus pour un nombre d'équivalents de potasse égal à 10, ce qui correspond à une silcone dimère fluorée.

### b) Cube perfluoré

L'octavinyle perfluoroalkylé (le cube) a été greffé après ouverture dans l'isopropanol à 60°C avec différentes quantités de potasse pendant 15 minutes :
- 2 équivalents
- 5 équivalents
- 7 équivalents
- 10 équivalents

La tension dans le cube étant plus grande que celle dans le cycle, il n'a suffi que de 15 minutes avec deux équivalents de potasse pour l'ouvrir.

Dans le tableau ci-dessous sont regroupées les caractéristiques des revêtements faits avec l'octavinyle perfluoré en présence d'une quantité variable de potasse :

| Molécule | θₑₐᵤ | θ_{Avancée} / θ_{Reculée} Hystérèse | Volumes de décrochements (µl) à 45° et 90° |
|---|---|---|---|
| Cube 3% 2éq de KOH | 109,3° ± 0,3° | 116°/85° 31° | 19,5 / 12,5 |
| Cube 3% 5éq de KOH | 109,3° ± 0,3° | 120°/98° 22° | 17,5 / 11,5 |
| Cube 3% 7éq de KOH | 109,2° ± 0,3° | 119°/99° 20° | 15,5 / 10,5 |
| Cube 3% 10éq de KOH | 103,8° ± 0,3° | 112°/95° 17° | 12,5 / 7,5 |
| X 3% | 108, 0° ± 0,9° | 118°/81° 37° | 18,9 / 10,5 |

### Caractérisation des revêtements du cube perfluoré

Les angles de contact à l'eau sont satisfaisants avec des valeurs de l'ordre de 110°.

Les volumes de décrochements varient inversement à la quantité de potasse introduite dans la solution. Lorsque le cube est en milieu peu basique, les fragments peuvent avoir des tailles très variables. Ainsi une fois les molécules greffées le revêtement peut présenter une certaine irrégularité induisant des volumes de décrochement élevés. Ils restent cependant inférieurs à ceux de la technique connue. Les meilleurs résultats sont obtenus pour un nombre d'équivalents de potasse égal à 10, ce qui correspond vraisemblablement à des silicones à deux ou trois unités

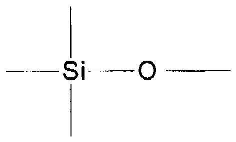

### Exemple 4

On dépose des couches hydrophobes sur une sous-couche de silice dont la surface se trouve dans un état activé comme évoqué dans le préambule de la demande en relation avec la demande WO 2005/084943.

Il s'agit d'une couche de silice déposée sur verre flotté silicosodocalcique par un procédé de déposition en phase gazeuse par procédé chimique, assistée par plasma (Plasma Enhanced Chemical Vapour Deposition ou PECVD), et sur laquelle une rugosité RMS de 5 nm a été fraîchement créée, c'est-à-dire au plus une heure environ avant le dépôt de la couche hydrophobe, de préférence au plus 15 minutes avant et de manière particulièrement préférée au plus 5 minutes avant.

La rugosité RMS est créée sur la sous-couche de silice en la soumettant à un traitement plasma par un gaz fluoré tel que C₂F₆ associé à de l'oxygène.

Le dépôt de la solution est fait par chiffonnage sans avivage ni primage, avec les mêmes solutions de cube ou de cycle fluorés que pour les dépôts sur surface plane (exemple 3).

Nous avons fait trois dépôts dont les caractéristiques sont regroupées dans le tableau ci-dessous :
- 1 : X à 3% dans le mélange isopropanol: HCl (90 : 10) + 15 minutes d'hydrolyse
- 2 : Cycle perfluoré à 3% avec 2 équivalents de potasse dans l'isopropanol + 1 heure d'hydrolyse à 40°C.
- 3 : Cube perfluoré à 3% avec 5 équivalents de potasse dans l'isopropanol + 15 minutes d'hydrolyse à 60°C

| Molécule et concentration | θₑₐᵤ | Volumes de décrochements (µl) à 45° et 90° |
|---|---|---|
| Cycle 3 % 2éq de KOH Isopropanol | 121,5° ± 2,0° | 26/11 |
| Cube 3% 5éq de KOH Isopropanol | 109,7° ± 1,3° | 29/16 |
| X 3% | 109,7° ± 1,3° | 32/18 |

### Caractérisation des revêtements « silicones » sur surface rugueuse

Les observations suivantes peuvent être faites :

La molécule cubique de par sa taille présente un encombrement stérique important, c'est pourquoi elle se greffe, une fois ouverte, moins bien que la molécule cyclique ou la référence X.

Le cube et le cycle lorsqu'ils se greffent nivellent la rugosité. Ainsi, leurs volumes de décrochements sont meilleurs que celui de X qui, de par sa taille ne peut pas aussi bien combler les rugosités. L'objectif premier est atteint.

Enfin, nous pouvons remarquer que l'angle de contact à l'eau du cycle est excellent.

L'évacuation spontanée des gouttes d'eau sur pare-brise se fera à plus basse vitesse avec des revêtements silicones selon l'invention qu'avec des revêtements de silanes fluorés de la technique connue. L'essuyage est donc moins fréquent, ainsi que les contraintes mécaniques qui en résultent. Ceci favorise une meilleure durabilité du revêtement.

Les documents US 4 001 403, US 3 146 251 et US 2 915 544 décrivent des composés de formule (I) mais pas leur mise en oeuvre selon le procédé de la présente demande.

## Revendications

1. Procédé visant à procurer ou restaurer l'hydrophobie d'un substrat par le dépôt d'une composition de traitement hydrophobe comprenant un ou plusieurs composés en mélange répondant à la formule 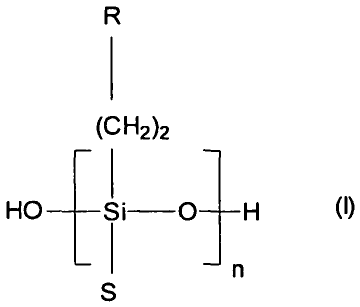 dans laquelle
- au moins un R est un groupe Cₐ F₂ₐ₊₁, a étant un nombre entier,
- un autre R pouvant être un groupe Si X_{3-b} R¹_{b},
b étant 0, 1 ou 2
X un groupe hydrolysable tel qu'alkoxy, hydroxy ou halogéno
R¹ un groupe hydrocarboné
- S est un atome d'hydrogène, un groupe OH, un groupe alkyle tel que CH₃ ou un groupe O Si R² R³ R⁴, R², R³ et R⁴ étant identiques ou différents et consistant notamment en l'un des groupes susmentionnés portés par un atome Si, tels que (CH₂)₂ - R, un atome d'hydrogène, un groupe alkyle ou O Si R²R³R⁴,
- n est un entier ≥ 1,
- le nombre total d'atomes Si n'excédant pas 20.

2. Procédé selon la revendication 1, **caractérisé en ce que** le nombre d'atomes Si n'excède pas 10.

3. Procédé selon la revendication 2, **caractérisé en ce que** le nombre d'atomes Si n'excède pas 5.

4. Procédé selon l'une des revendications précédentes, **caractérisé en ce que** la composition comprend un ou plusieurs composés en mélange choisis parmi

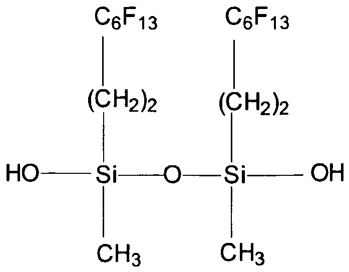

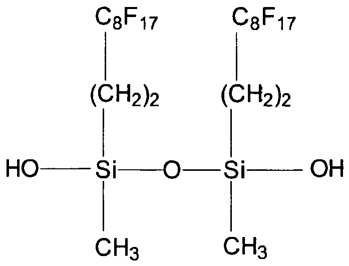

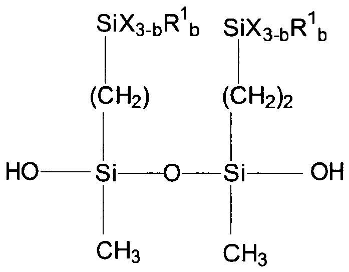

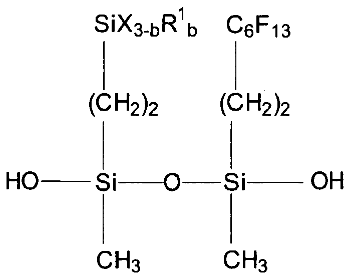

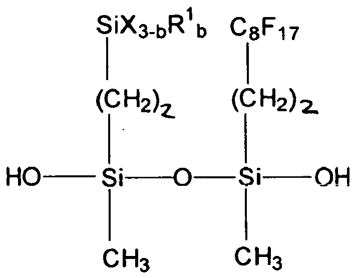

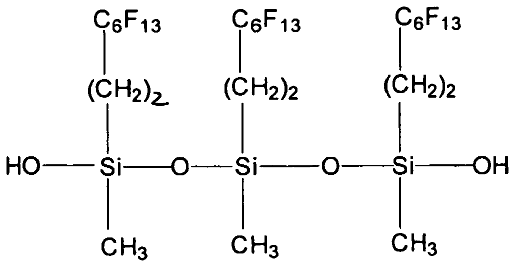

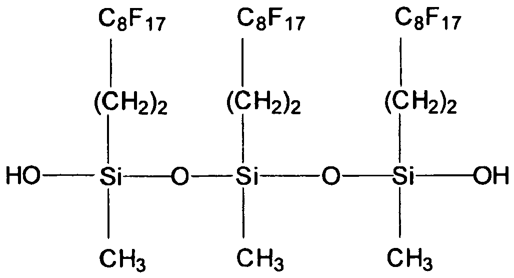

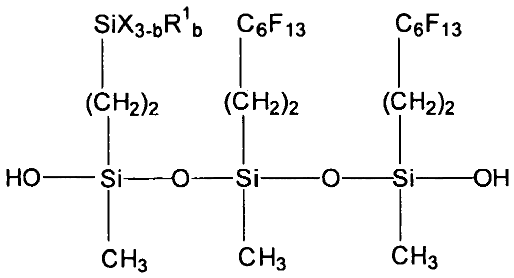

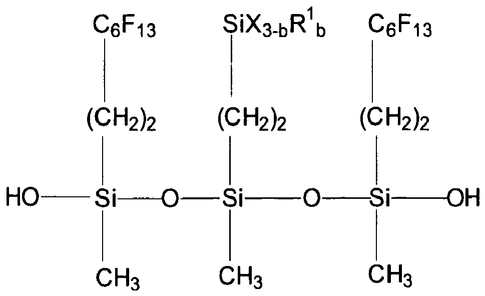

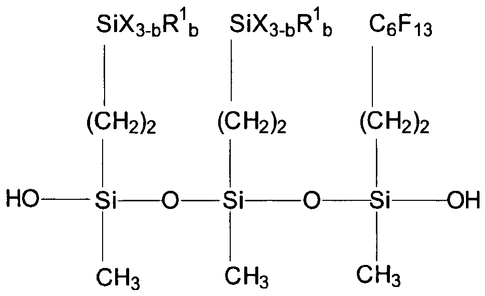

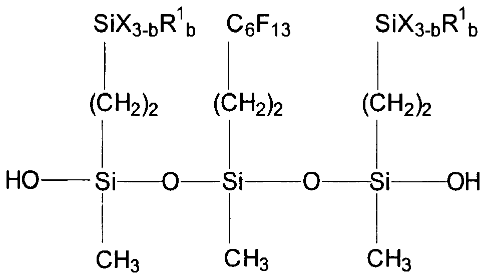

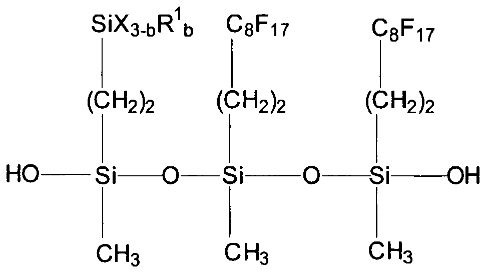

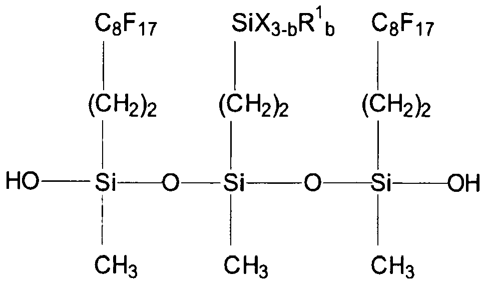

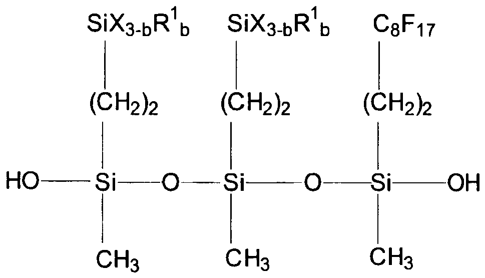

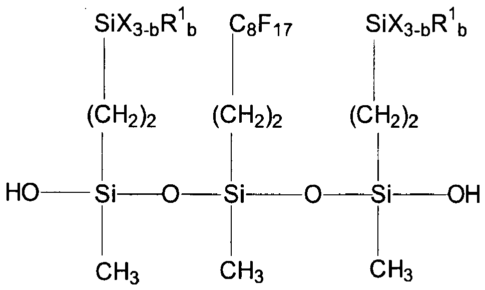

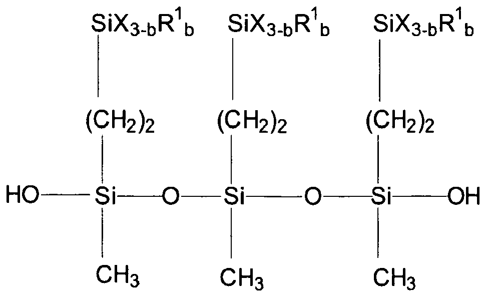

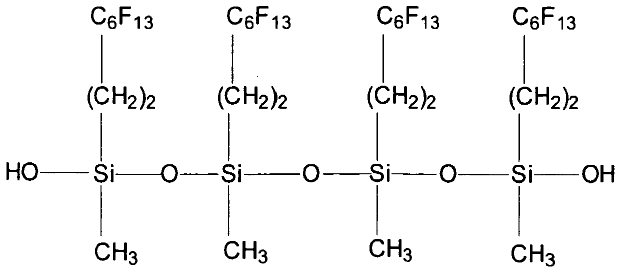

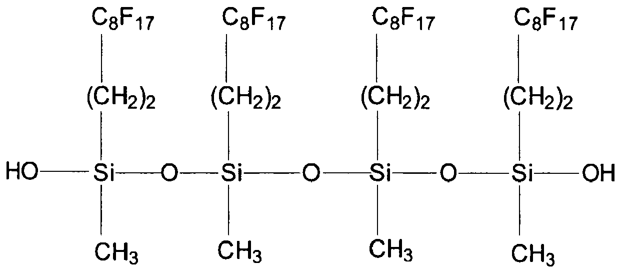

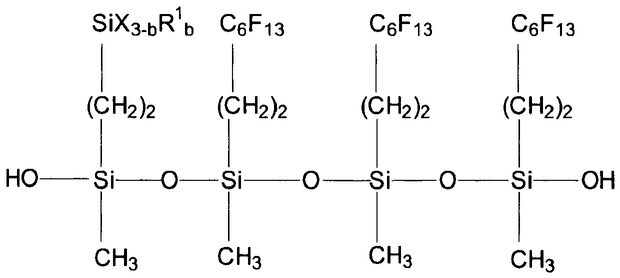

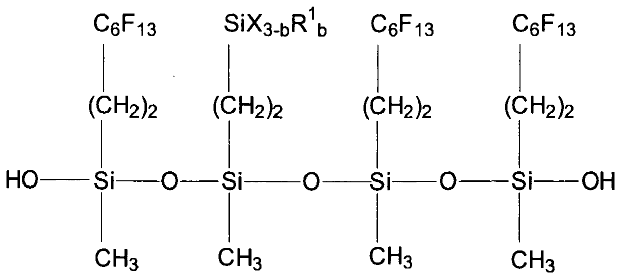

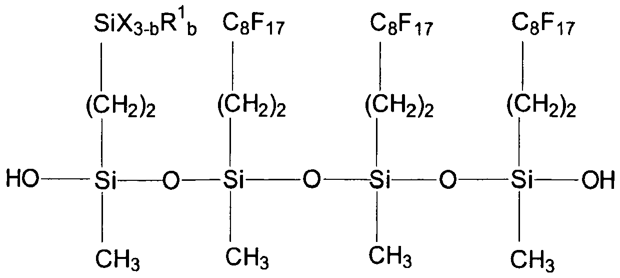

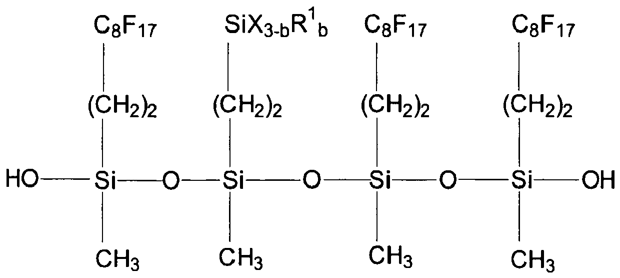

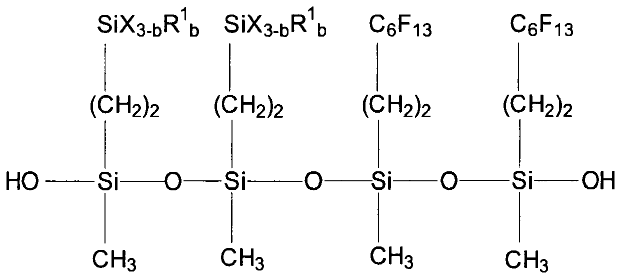

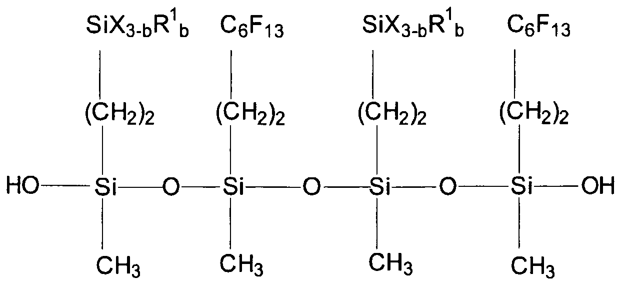

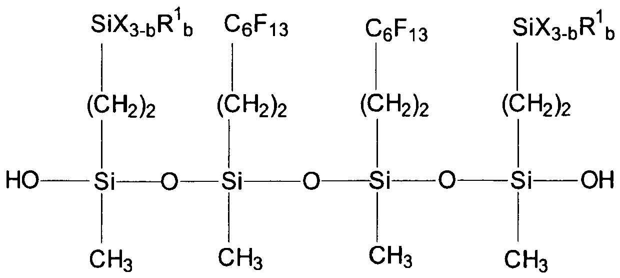

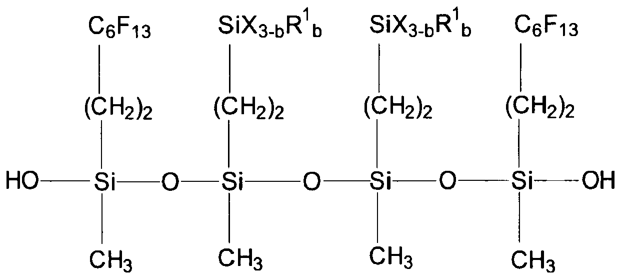

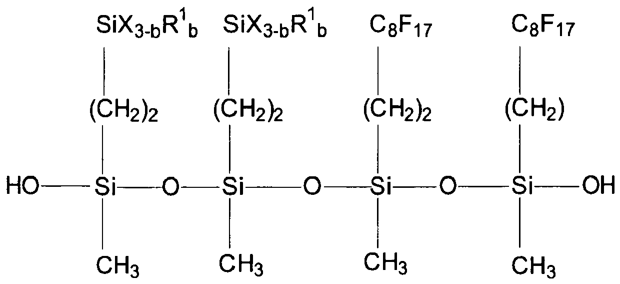

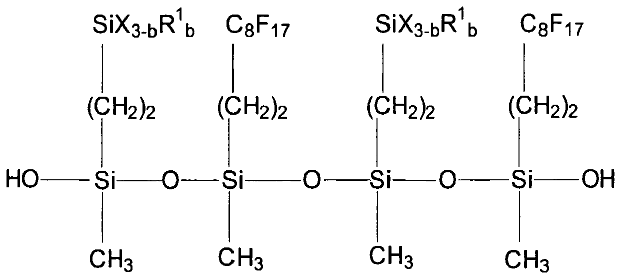

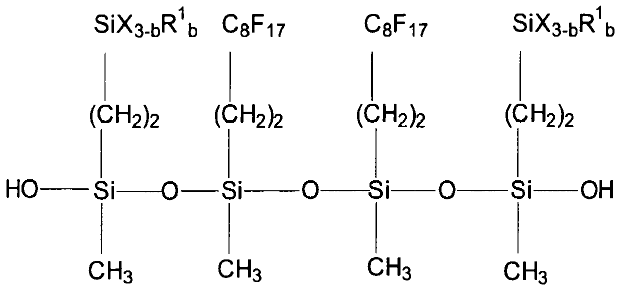

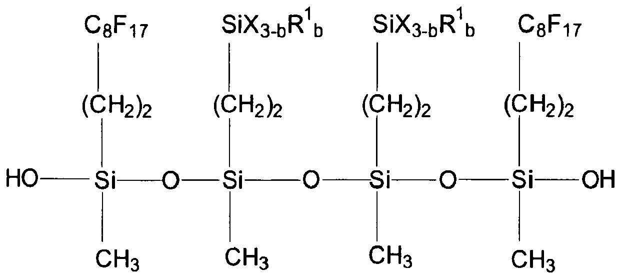

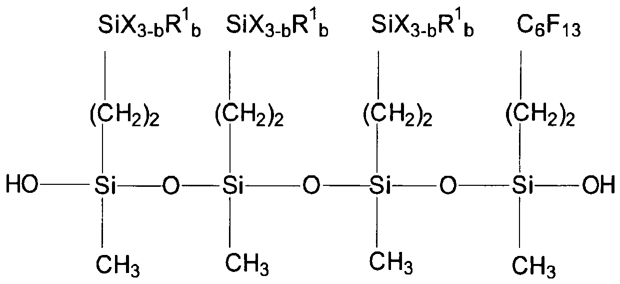

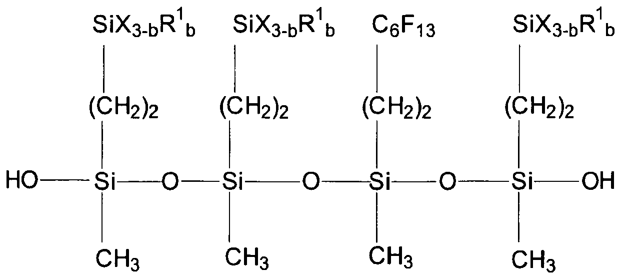

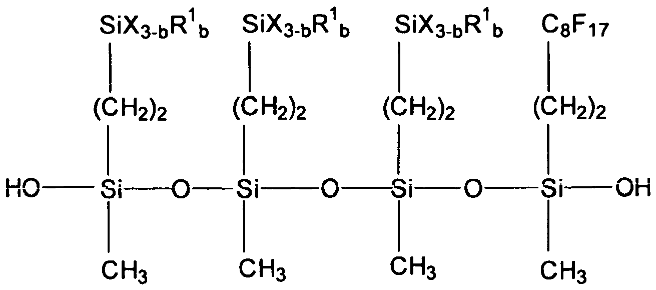

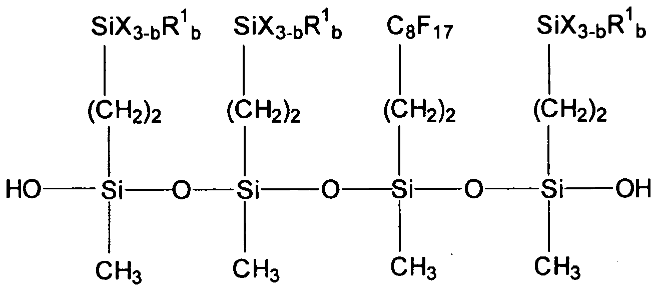

5. Procédé selon l'une des revendications précédentes, **caractérisé en ce que** la composition consiste en une solution alcoolique basique.

6. Procédé selon l'une des revendications précédentes, **caractérisé en ce que** la composition contient 0,05 à 5% en masse de composé(s) de formule (I).

7. Procédé selon l'une des revendications précédentes, **caractérisé en ce qu'**il comprend les étapes préalables consistant à
- préparer une composition de primage obtenue à partir d'un mélange d'un silane SiX₄, X étant une fonction hydrolysable, avec un système de solvant(s) aqueux et alcool et au moins un catalyseur choisi parmi un acide et/ou une base de Bronsted, la teneur en SiX₄ étant comprise entre 0,001 et 5 % en poids de la composition,
- traiter au moins la partie du substrat destinée à recevoir la couche hydrophobe avec ladite composition de primage.

8. Procédé selon l'une des revendications 1 à 6, **caractérisé en ce qu'**il comprend les étapes préalables consistant à
- préparer une composition de primage obtenue à partir d'un mélange d'un disilane X₃SiRSiX₃, X étant une fonction hydrolysable et R une chaîne alkyle linéaire, ramifiée ou aromatique, de préférence linéaire, dans lequel le nombre d'atomes de carbone établissant la liaison entre les deux atomes de silicium est compris entre 1 et 4, avec un système de solvant(s) aqueux et alcool et au moins un catalyseur choisi parmi un acide et/ou une base de Bronsted, la teneur en X₃SiRSiX₃ étant comprise entre 0,001 et 5 % en poids de la composition :
- traiter au moins la partie du substrat destinée à recevoir la couche hydrophobe avec ladite composition de primage.

9. Procédé selon l'une des revendications précédentes, **caractérisé en ce que** l'on dépose la composition sur une sous-couche essentiellement minérale à teneur en silicium, dont la surface se trouve dans un état activé.

10. Substrat verrier hydrophobe présentant une couche extérieure formée par un procédé selon l'une des revendications précédentes.

11. Application d'un substrat verrier selon la revendication 10 comme vitrage de véhicule de transport terrestre, aquatique ou aérien, vitrage pour le bâtiment, pour le mobilier urbain tel qu'abribus, écran d'affichage, lampe, pour l'électroménager notamment les tablettes ou portes de réfrigérateur, congélateur, four, plaque vitrocéramique, pour l'aménagement intérieur comme mobilier, tablettes, cabine de douche, aquarium, dispositif d'éclairage, écran de téléviseur, ordinateur ou similaire, comme verre ophtalmique, pour le conditionnement comme bouteille, flacon ou pot.

## Claims

1. Process targeted at providing or restoring the hydrophobicity of a substrate by the deposition of a hydrophobic treatment composition comprising one or more compounds, as a mixture, corresponding to the formula 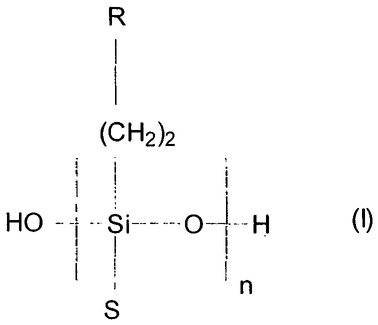 in which
- at least one R is a CₐF₂ₐ₊₁ group, a being an integer,
- it being possible for another R to be an SiX_{3-b}R¹_{b} group,
b being 0, 1 or 2
X being a hydrolysable group, such as alkoxy, hydroxyl or halo
R¹ being a hydrocarbon group
- S is a hydrogen atom, an OH group, an alkyl group, such as CH₃, or an OSiR²R³R⁴ group, R², R³ and R⁴ being identical or different and consisting in particular of one of the abovementioned groups carried by an Si atom, such as (CH₂)₂-R, a hydrogen atom, an alkyl group or OSiR²R³R⁴,
- n is an integers ≥ 1,
- the total number of Si atoms not exceeding 20.

2. Process according to Claim 1, **characterized in that** the number of Si atoms does not exceed 10.

3. Process according to Claim 2, **characterized in that** the number of Si atoms does not exceed 5.

4. Process according to one of the preceding claims, **characterized in that** the composition comprises one or more compounds, as a mixture, chosen from

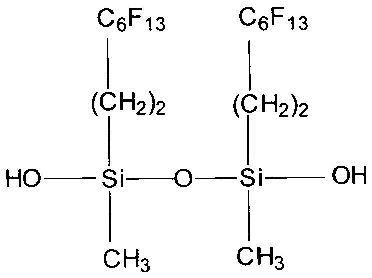

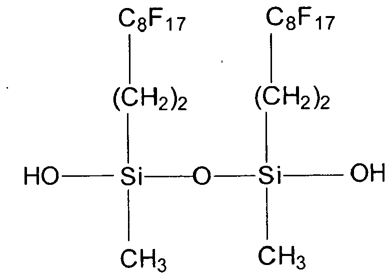

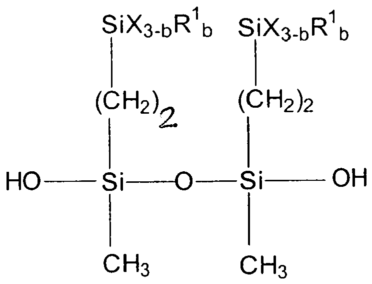

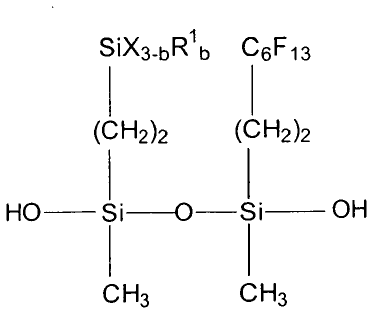

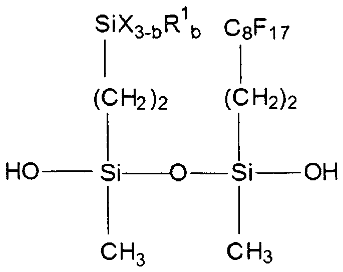

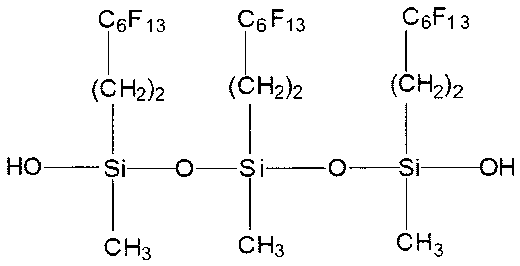

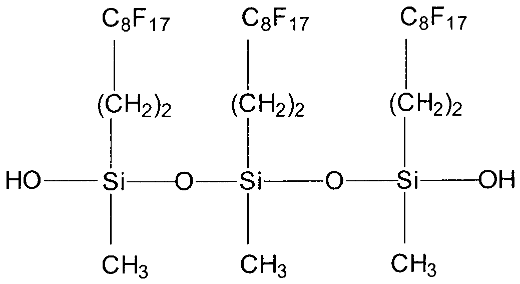

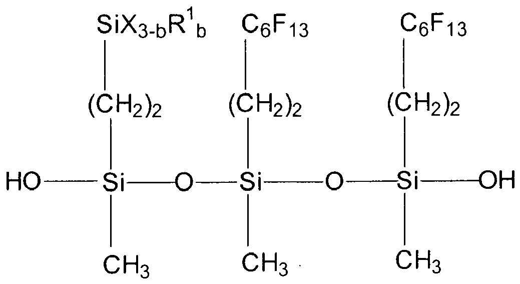

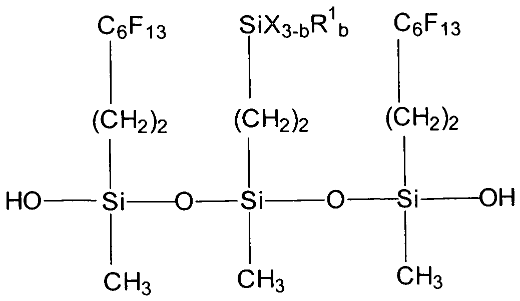

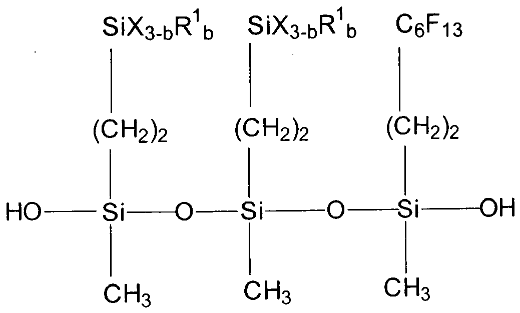

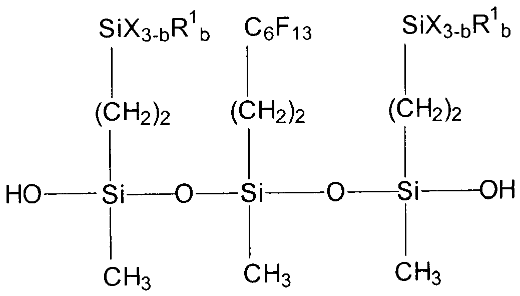

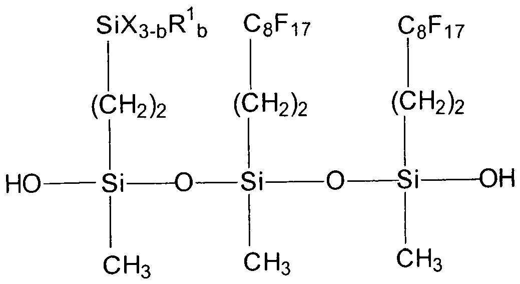

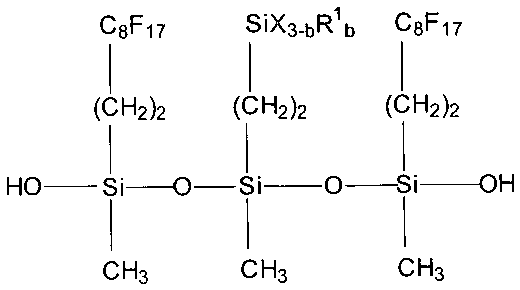

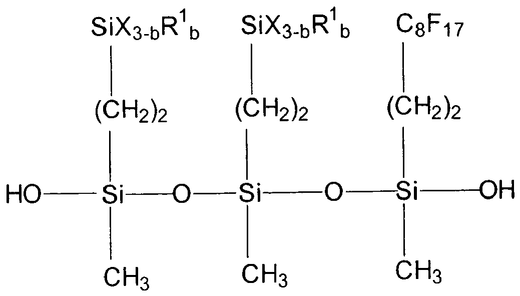

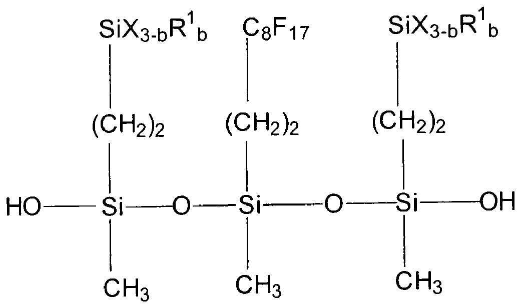

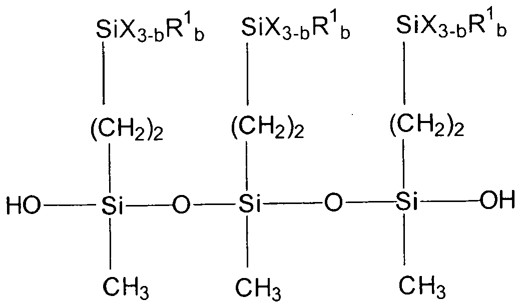

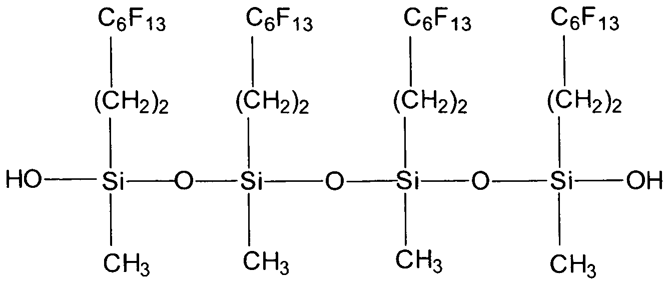

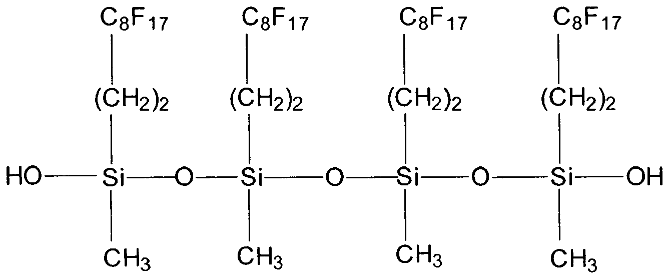

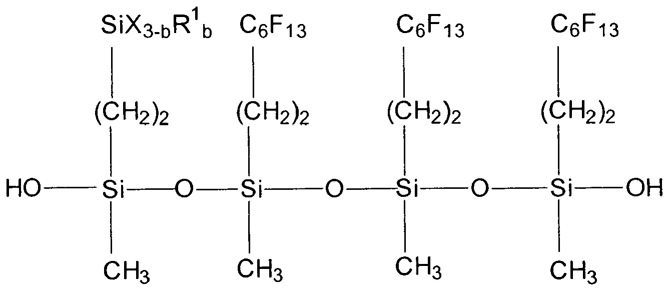

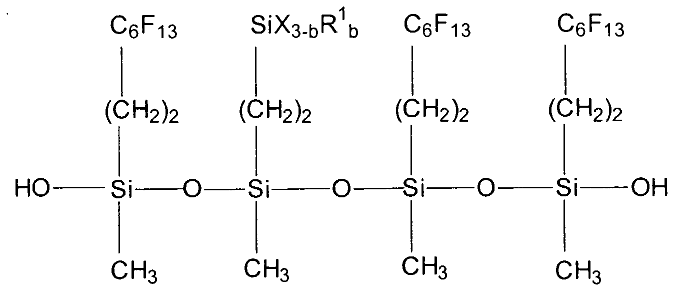

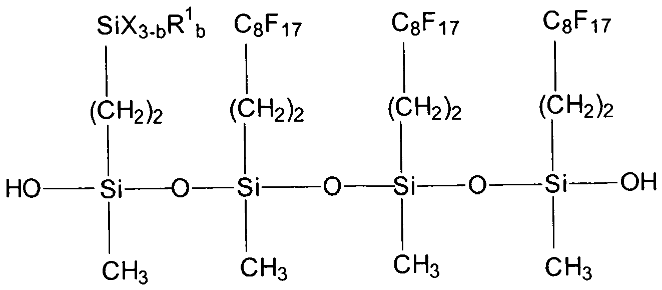

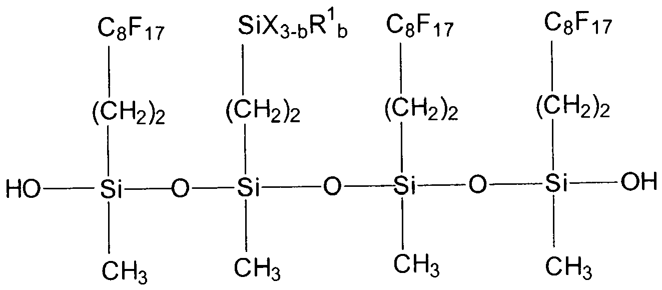

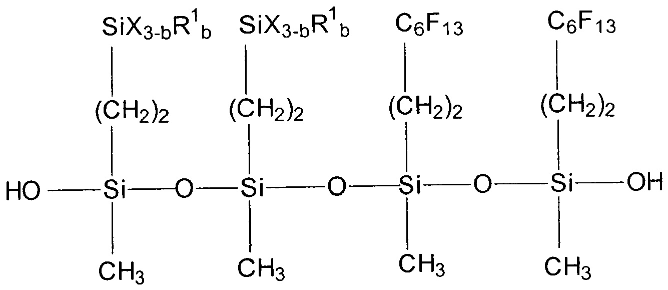

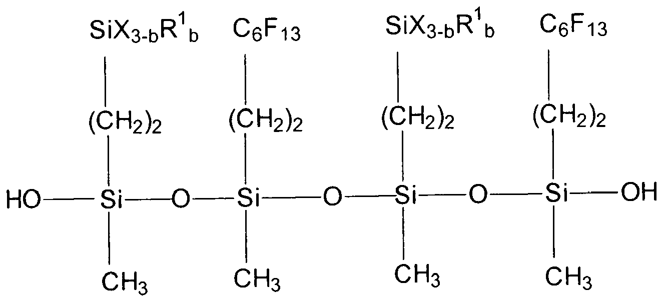

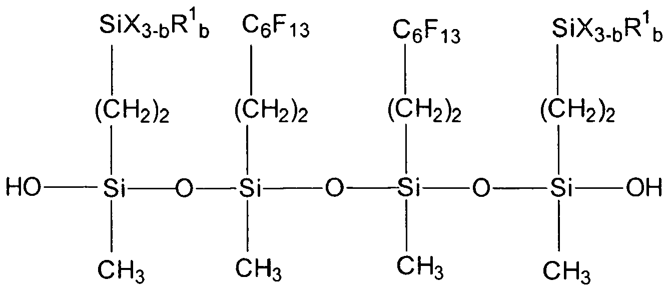

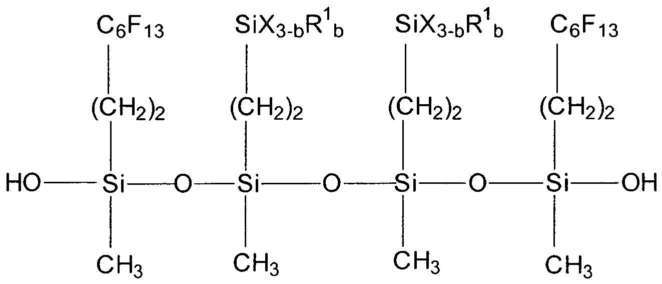

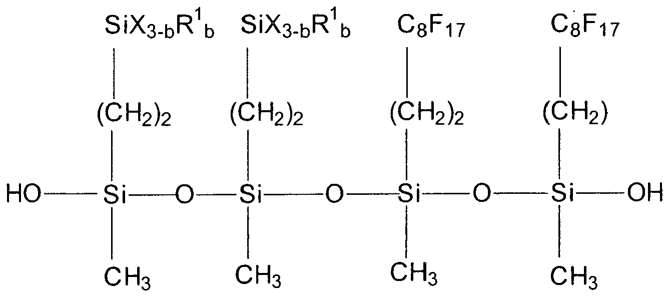

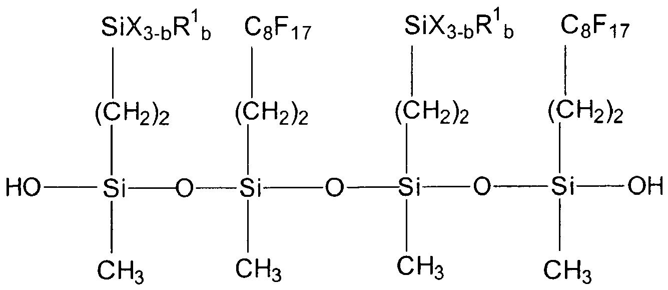

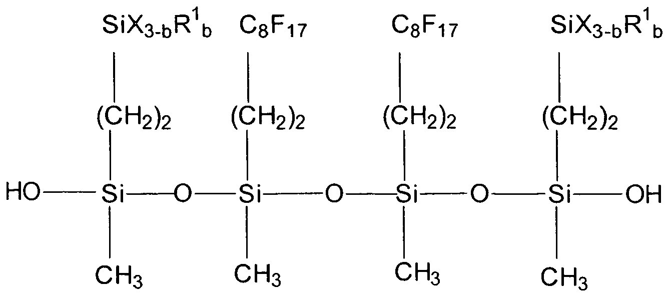

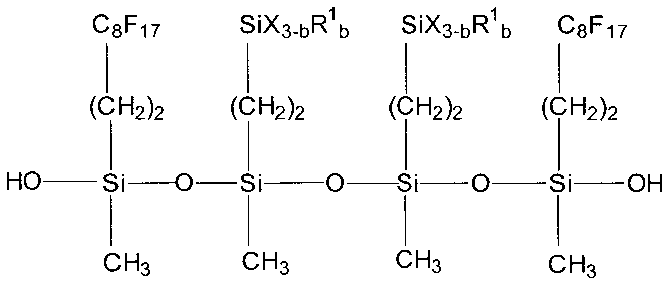

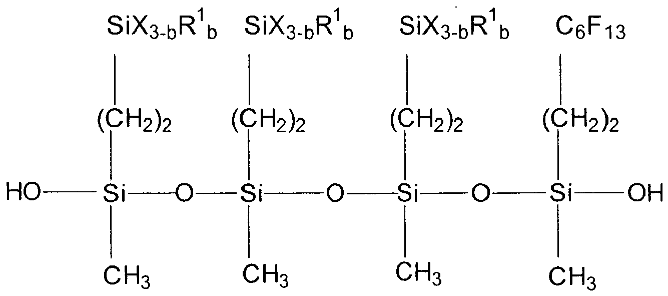

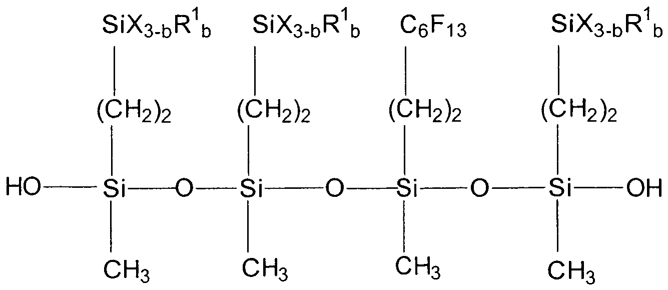

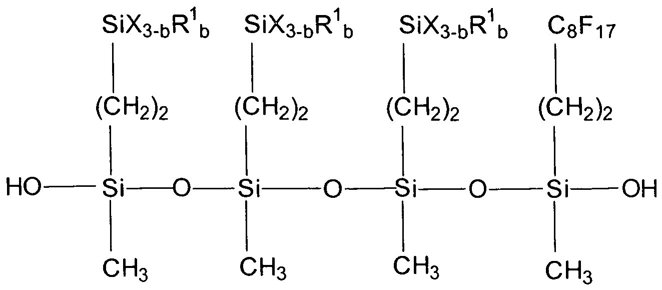

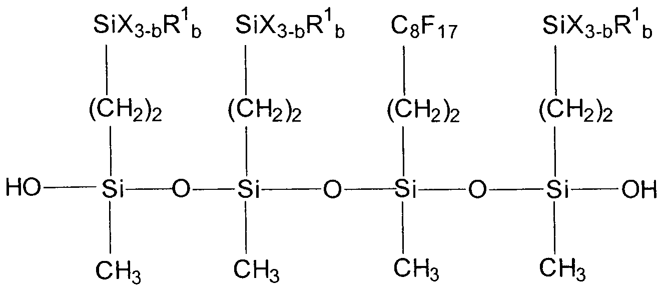

5. Process according to one of the preceding claims, **characterized in that** the composition consists of a basic alcoholic solution.

6. Process according to one of the preceding claims, **characterized in that** the composition comprises from 0.05 to 5% by weight of compound(s) of formula (I).

7. Process according to one of the preceding claims, **characterized in that** it comprises the preliminary stages consisting in
- preparing a priming composition obtained from a mixture of a silane SiX₄, X being a hydrolysable functional group, with a system of alcohol and aqueous solvent(s) and at least one catalyst chosen from a Bronsted acid and/or base, the content of SiX₄ being between 0.001 and 5% by weight of the composition,
- treating at least the portion of the substrate intended to receive the hydrophobic layer with said priming composition.

8. Process according to one of Claims 1 to 6, **characterized in that** it comprises the preliminary stages consisting in
- preparing a priming composition obtained from a mixture of a disilane X₃SiRSiX₃, X being a hydrolysable functional group and R being a linear, branched or aromatic, preferably linear, alkyl chain in which the number of carbon atoms forming the bond between the two silicon atoms is between 1 and 4, with a system of alcohol and aqueous solvent(s) and at least one catalyst chosen from a Bronsted acid and/or base, the content of X₃SiRSiX₃ being between 0.001 and 5% by weight of the composition;
- treating at least the portion of the substrate intended to receive the hydrophobic layer with said priming composition.

9. Process according to one of the preceding claims, **characterized in that** the composition is deposited on an essentially inorganic sublayer comprising a silicon content, the surface of which occurs in an activated state.

10. Hydrophobic glass substrate exhibiting an external layer formed by a process according to one of the preceding claims.

11. Application of a glass substrate according to Claim 10 as glazing for ground, sea or air transport vehicle, glazing for buildings, for street furniture, such as bus shelter, billboard, lamp, for domestic electrical appliances, in particular shelves or doors of refrigerator, freezer, oven, glass-ceramic plate, for interior fittings, such as furniture, shelves, shower stall, aquarium, lighting device, television screen, computer or the like, as ophthalmic glass, for packaging, such as bottle, flask or jar.

## Patentansprüche

1. Verfahren zum Bewirken oder Wiederherstellen der Hydrophobie eines Substrates durch das Abscheiden einer Zusammensetzung zur hydrophoben Behandlung, die eine oder mehrere Verbindungen in Mischung umfasst, die folgender Formel entsprechen 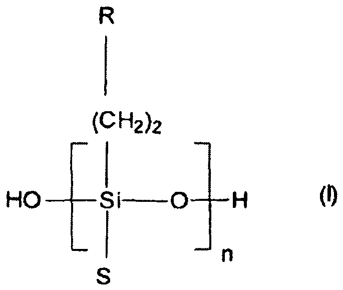 worin:
- wenigstens ein R eine CₐF₂ₐ₊₁-Gruppe ist, wobei a eine Ganzzahl ist,
- wobei ein weiteres R eine Si X_{3-b}R¹_{b}-Gruppe sein kann,
wobei b 0, 1 oder 2 ist,
X eine hydrolysierbare Gruppe, wie Alkoxy, Hydroxy oder Halogen ist,
R¹ eine Kohlenwasserstoff-Gruppe ist,
- S ein Wasserstoffatom, eine OH-Gruppe, eine Alkyl-Gruppe, wie CH₃ oder eine O Si R² R³ R⁴-Gruppe ist, wobei R², R³ und R⁴ identisch oder unterschiedlich sind und insbesondere aus einer der vorgenannten Gruppen, getragen von einem Si-Atom, wie (CH₂)₂-R, einem Wasserstoffatom, einer Alkyl- oder O Si R²R³R⁴-Gruppe bestehen,
- n eine Ganzzahl ≥ 1 ist,
- wobei die Gesamtzahl der Si-Atome 20 nicht überschreitet.

2. Verfahren nach Anspruch 1, **dadurch gekennzeichnet, dass** die Anzahl der Si-Atome 10 nicht überschreitet.

3. Verfahren nach Anspruch 2, **dadurch gekennzeichnet, dass** die Anzahl der Si-Atome 5 nicht überschreitet.

4. Verfahren nach einem der vorstehenden Ansprüche, **dadurch gekennzeichnet, dass** die Zusammensetzung eine oder mehrere Verbindungen in Mischung umfasst, die ausgewählt sind aus:

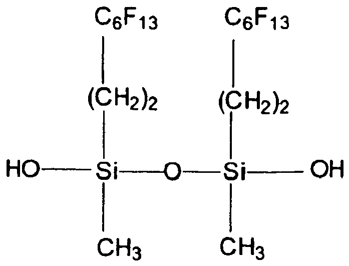

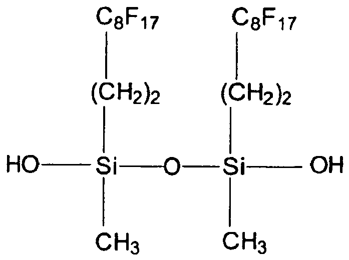

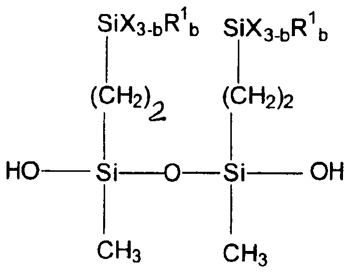

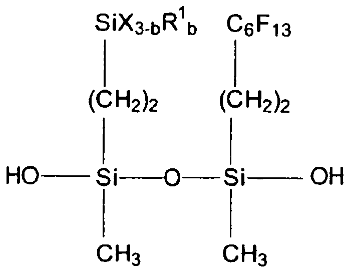

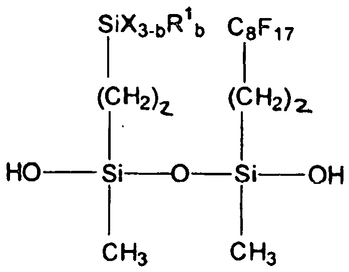

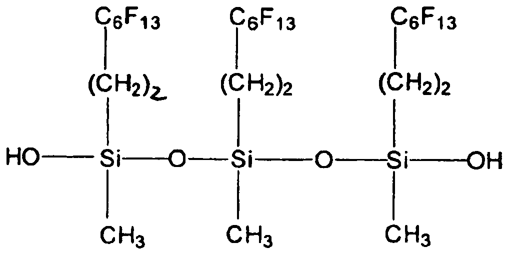

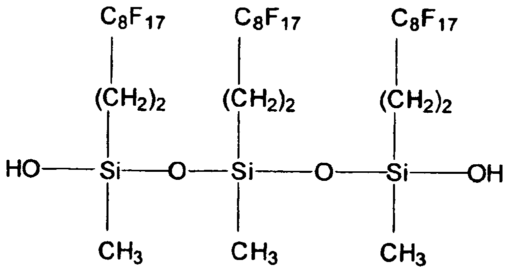

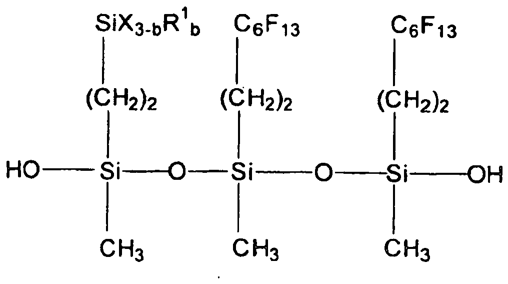

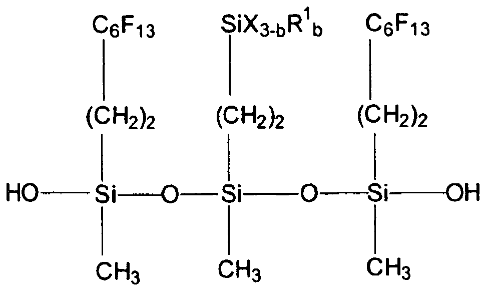

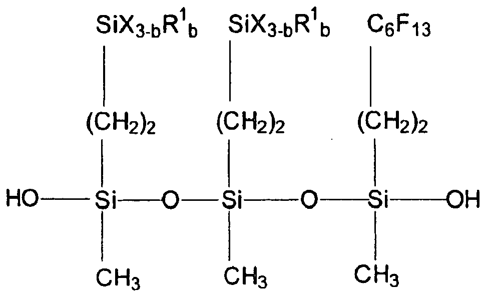

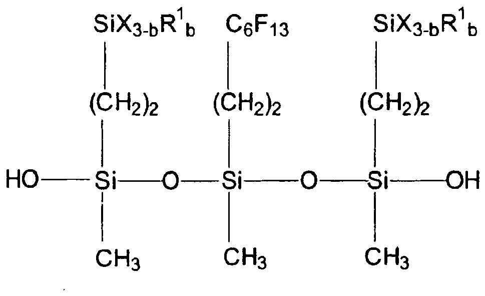

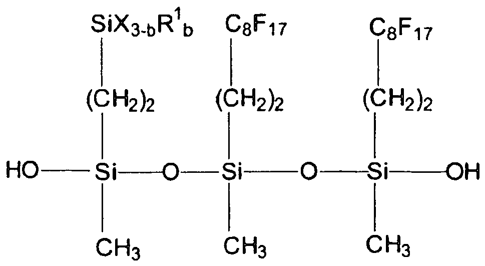

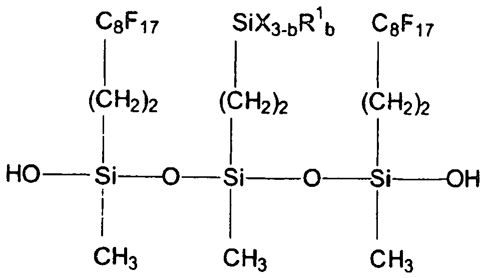

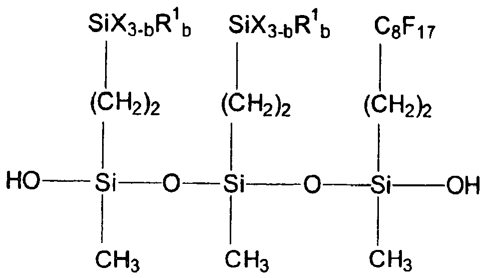

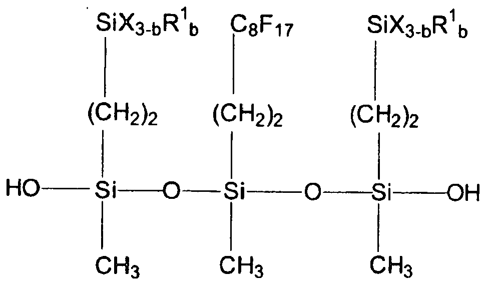

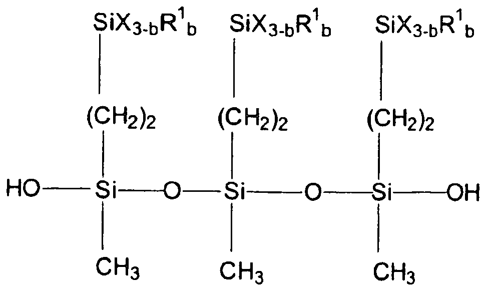

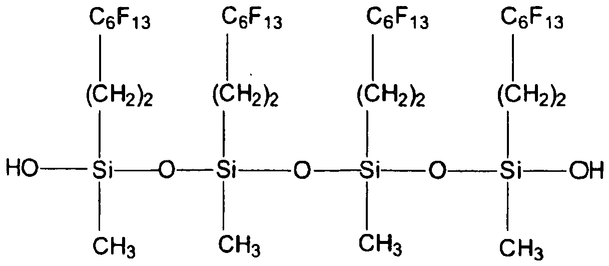

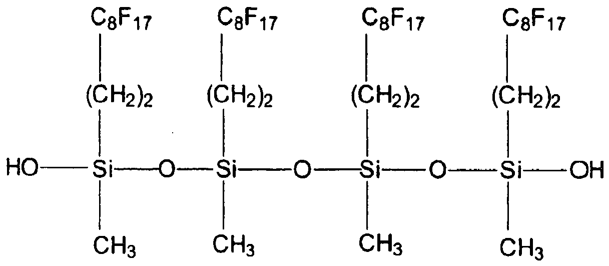

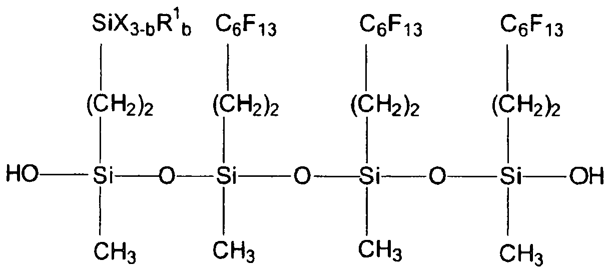

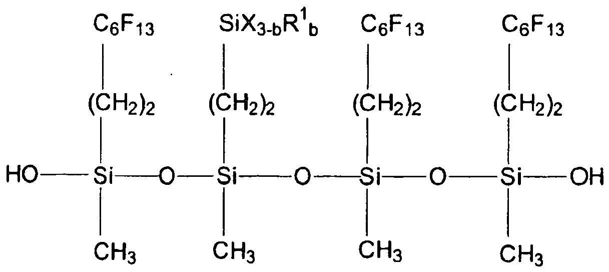

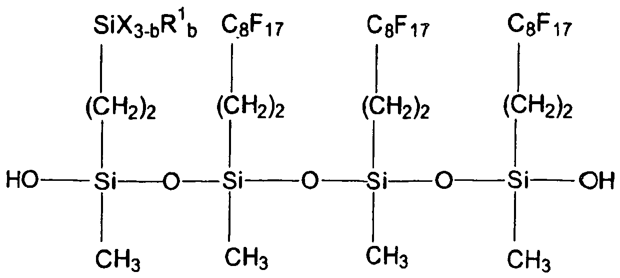

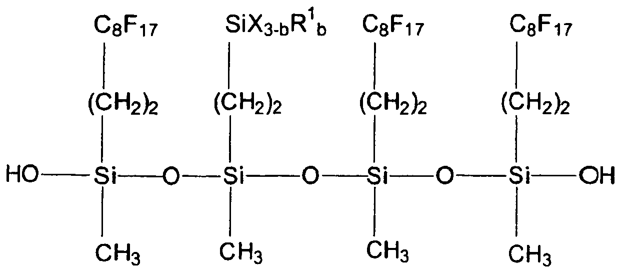

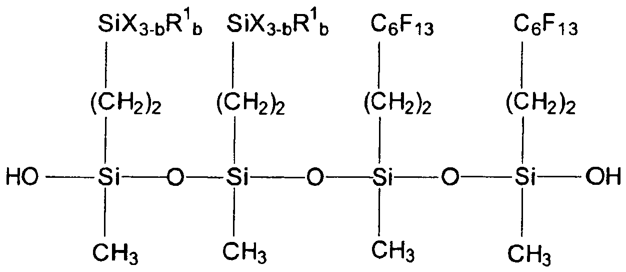

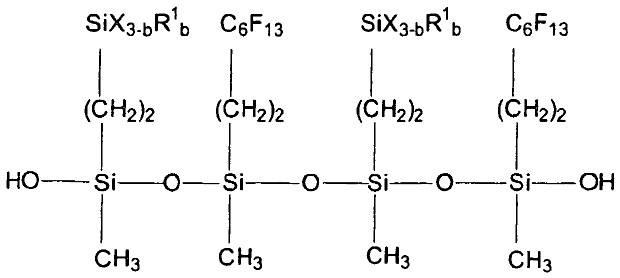

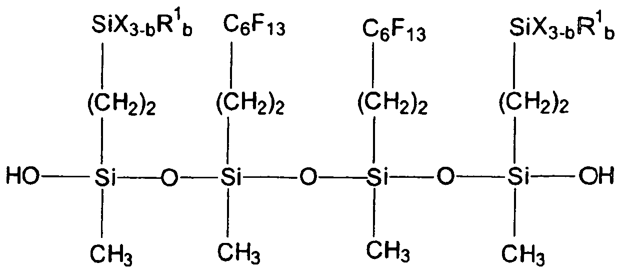

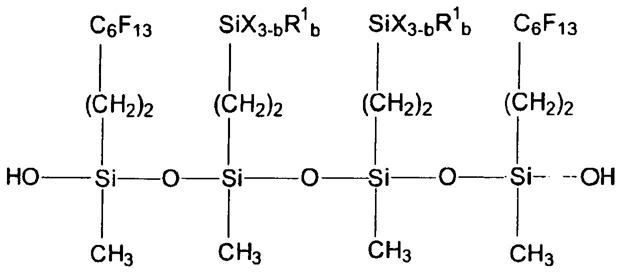

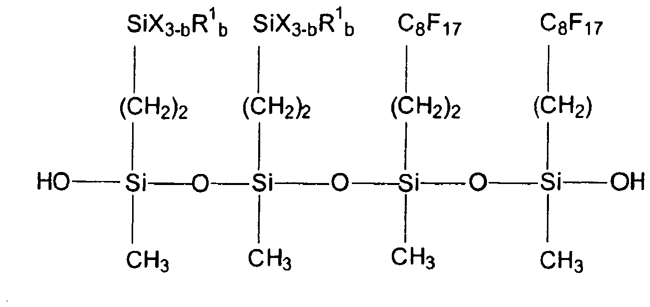

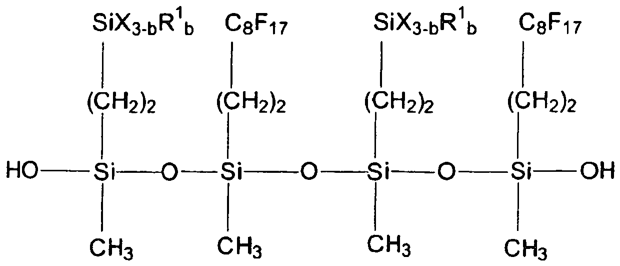

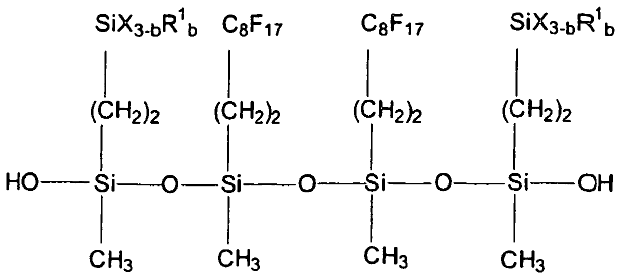

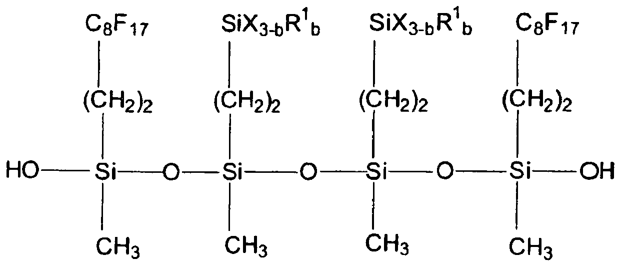

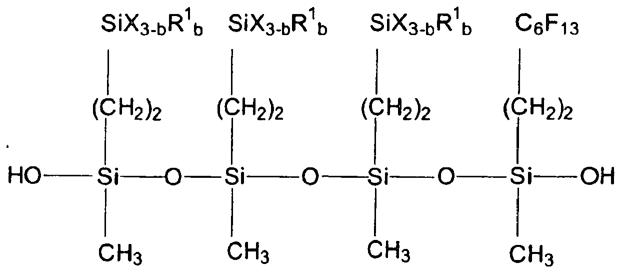

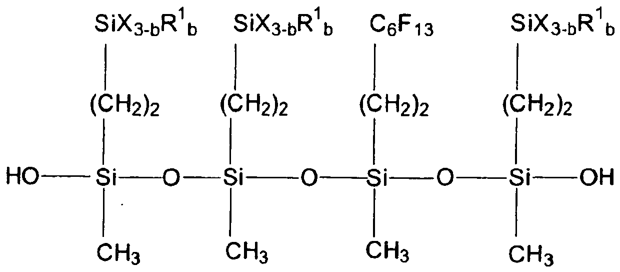

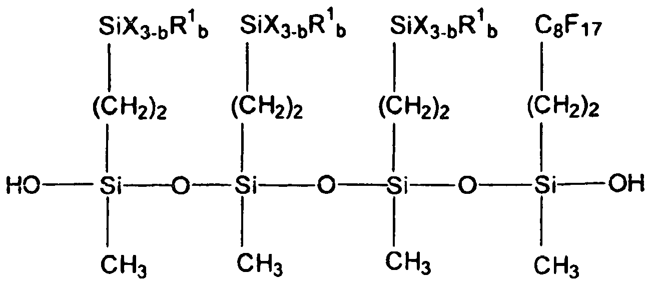

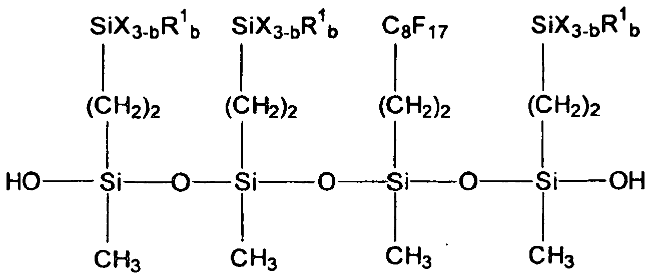

5. Verfahren nach einem der vorstehenden Ansprüche, **dadurch gekennzeichnet, dass** die Zusammensetzung aus einer basischen alkoholischen Lösung besteht.

6. Verfahren nach einem der vorstehenden Ansprüche, **dadurch gekennzeichnet, dass** die Zusammensetzung 0,05 bis 5 Masseprozent der Verbindung(en) der Formel (I) enthält.

7. Verfahren nach einem der vorstehenden Ansprüche, **dadurch gekennzeichnet, dass** es die vorausgehenden Schritte umfasst, die darin bestehen:
- eine Primerzusammensetzung herzustellen, die aus einer Mischung eines Silan SiX₄, wobei X eine hydrolysierbare Funktion ist, mit einem System aus wässrigen Lösungsmittel(n) und Alkohol und wenigstens einem Katalysator, der aus einer Bronsted-Säure und/oder Bronsted-Base ausgewählt ist, erhalten wird, wobei der SiX₄-Gehalt zwischen 0,001 und 5 Gew.-% der Zusammensetzung liegt,
- wenigstens den Teil des Substrats, der dazu bestimmt ist, die hydrophobe Schicht aufzunehmen, mit der Primerzusammensetzung zu behandeln.

8. Verfahren nach einem der Ansprüche 1 bis 6, **dadurch gekennzeichnet, dass** es die vorausgehenden Schritte umfasst, die darin bestehen:
- eine Primerzusammensetzung herzustellen, die aus einer Mischung eines Disilan X₃SiRSiX₃, wobei X eine hydrolysierbare Funktion und R eine lineare, verzweigte oder aromatische, vorzugsweise lineare Alkylkette ist, wobei die Anzahl der Kohlenstoffatome, die die Bindung zwischen den beiden Siliziumatomen herstellen, zwischen 1 und 4 liegt, mit einem System aus wässrigen Lösungsmittel(n) und Alkohol und wenigstens einem Katalysator, der aus einer Brønsted-Säure und/oder Bronsted-Base ausgewählt ist, erhalten wird, wobei der X₃SiRSiX₃-Gehalt zwischen 0,001 und 5 Gew.-% der Zusammensetzung liegt,
- wenigstens den Teil des Substrats, der dazu bestimmt ist, die hydrophobe Schicht aufzunehmen, mit der Primerzusammensetzung zu behandeln.

9. Verfahren nach einem der vorstehenden Ansprüche, **dadurch gekennzeichnet, dass** die Zusammensetzung auf einer im Wesentlichen mineralischen, siliziumhaltigen Unterlage abgeschieden wird, deren Oberfläche sich in einem aktivierten Zustand befindet.

10. Hydrophobes Glassubstrat, das eine durch ein Verfahren nach einem der vorstehenden Ansprüche gebildete Außenschicht aufweist.

11. Anwendung eines Glassubstrats nach Anspruch 10, als Verglasung für Land-, Wasser- oder Lufttransportfahrzeuge, Gebäudeverglasung, für Straßeneinrichtungen, wie Bushaltestellen-Unterstände, Bildschirme, Lampen, für Haushaltselektrogeräte, insbesondere Einlegeböden oder Türen von Kühlschränken, Gefrierschränken, Öfen, Glaskeramik-Kochfelder, für die Innenausstattung wie Mobiliar, Regalbretter, Duschkabinen, Aquarien, Beleuchtungseinrichtungen, Bildschirme von Fernsehgeräten, Computern oder ähnlichem, als ophthalmisches Glas, für die Verpackung, wie Flaschen, Flacons oder Tiegel.
